(19) Europäisches Patentamt
European Patent Office
Office européen des brevets

(11) **EP 3 539 318 B1**

(12) **FASCICULE DE BREVET EUROPEEN**

(45) Date de publication et mention
de la délivrance du brevet:
**24.02.2021 Bulletin 2021/08**

(21) Numéro de dépôt: **17797158.7**

(22) Date de dépôt: **13.11.2017**

(51) Int Cl.:
*H04W 28/08* (2009.01)     *H04W 28/16* (2009.01)
*H04W 84/04* (2009.01)     *H04W 92/06* (2009.01)
*H04L 12/911* (2013.01)

(86) Numéro de dépôt international:
**PCT/EP2017/078994**

(87) Numéro de publication internationale:
**WO 2018/087350 (17.05.2018 Gazette 2018/20)**

(54) **EQUIPEMENT MANDATAIRE DANS UN SYSTÈME DE TÉLÉCOMMUNICATION CELLULAIRE**

PROXY-AUSRÜSTUNG IN EINEM ZELLULAREN TELEKOMMUNIKATIONSSYSTEM

PROXY EQUIPMENT IN A CELLULAR TELECOMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2016 FR 1660995**

(43) Date de publication de la demande:
**18.09.2019 Bulletin 2019/38**

(73) Titulaire: **Airbus Defence and Space SAS**
**31402 Toulouse Cedex 4 (FR)**

(72) Inventeurs:
• **MONTENOT, Jean-Marc**
  **31130 Balma (FR)**

• **SCHOLLER, Franck**
  **78100 Saint Germain en Laye (FR)**
• **CIBAUD, Franck**
  **95170 Deuil La Barre (FR)**

(74) Mandataire: **Cabinet Le Guen Maillet**
**3, impasse de la Vigie**
**CS 71840**
**35418 Saint-Malo Cedex (FR)**

(56) Documents cités:
**FR-A1- 2 943 885**     **US-A1- 2014 177 840**

**Description**

La présente invention concerne une gestion de bande passante dans un système de télécommunication cellulaire dans lequel au moins une station de base est déportée grâce à une liaison sans-fil constituant un goulot d'étranglement dans ledit système de télécommunication cellulaire. Un exemple se trouve dans US2014/177840.

Contrairement au modèle par commutation de circuits employé par les systèmes de télécommunication cellulaires précédents, la technologie LTE « Long Term Evolution », aussi appelée 4G (4e Génération), s'appuie uniquement sur un modèle par commutation de paquets. Les technologies futures de télécommunication, comme la technologie LTE-B, aussi appelée 5G (5e Génération), devraient suivre la même approche.

La technologie LTE vise à fournir une connectivité, basée sur le protocole IP (« Internet Protocol » en anglais), entre des équipements utilisateur UE (« User Equipment » en anglais) et un réseau de données par paquets PDN (« Packet Data Network » en anglais). Bien que la terminologie « LTE » englobe une évolution de la technologie d'accès radio UMTS (« Universal Mobile Telecommunications System » en anglais) nommée E-UTRAN (« Evolved Universal Terrestrial Radio Access Network » en anglais), la technologie LTE est aussi accompagnée d'une évolution des aspects non-radio, nommée « SAE » (« System Architecture Evolution » en anglais), qui comprend notamment une partie réseau cœur nommée EPC (« Evolved Packet Core » en anglais) qui est une évolution du réseau cœur introduit dans la technologie GPRS (« General Packet Radio Service » en anglais). Ensemble les technologies LTE et SAE forment un système de télécommunication cellulaire nommé EPS (« Evolved Packet System » en anglais).

Dans ce cadre, le système de télécommunication cellulaire EPS utilise un concept de porteuses radio (« radio bearers » en anglais), appelées porteuses radio EPS (« EPS bearers » en anglais), pour acheminer du trafic IP entre une passerelle du réseau PDN et un quelconque équipement utilisateur UE. Une porteuse radio EPS est un ensemble de ressources coordonnées dédiées au transport d'un flux de paquets IP avec une qualité de service QoS (« Quality of Service » en anglais) prédéterminée entre la passerelle et l'équipement utilisateur UE. Ensemble, la partie accès radio E-UTRAN et la partie réseau cœur EPC établissent (« set up » en anglais) et libèrent (« release » en anglais) des porteuses radio en fonction des besoins applicatifs vis-à-vis des équipements utilisateur UE présents dans le système de télécommunication cellulaire EPS.

De multiples porteuses radio peuvent être établies, et actives simultanément, pour un même équipement utilisateur UE, afin de mettre à disposition plusieurs flux de données de qualité de service QoS différents ou pour permettre d'assurer une connectivité à différents réseaux PDN. Par exemple, un équipement utilisateur UE peut être engagé dans une conversation de type VoIP (« Voice over IP » en anglais) et simultanément effectuer de la navigation Web ou un téléchargement selon le protocole FTP (« File Transfer Protocol » en anglais), auquel cas une première porteuse radio fournit la qualité de service QoS requise pour la conversation de type VoIP et une seconde porteuse radio au mieux des possibilités (« best-effort » en anglais) fournit un support adapté à la navigation Web ou au téléchargement selon le protocole FTP.

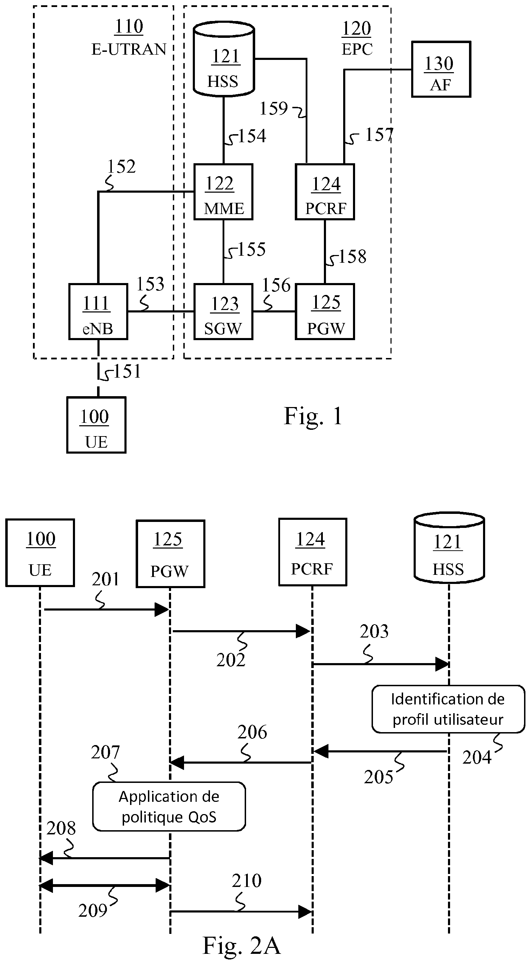

Un tel système de télécommunication cellulaire EPS est schématiquement représenté sur la **Fig. 1.** Le système de télécommunication cellulaire EPS comporte donc une partie accès radio E-UTRAN 110 via laquelle au moins un équipement utilisateur UE 100 accède aux services du système de télécommunication cellulaire EPS, et une partie réseau cœur EPC 120 donnant accès à différents réseaux PDN. La partie accès radio E-UTRAN 110 comporte une pluralité de stations de base, nommées « eNodeB », avec lesquelles des équipements utilisateur UE communiquent par voie radio pour accéder à des services offerts par le système de télécommunication cellulaire EPS. Par souci de simplification, la Fig. 1 représente une unique station de base eNB 111 et un unique équipement utilisateur UE 100 interconnectés par la liaison sans-fil 151. L'équipement utilisateur UE 100 accède aux services du système de télécommunication cellulaire EPS grâce à une liaison sans-fil 151 avec la station de base eNB 111. La station de base eNB 111 est connectée à une passerelle SGW (« Serving GateWay » en anglais) 123 de la partie réseau cœur EPC 120 grâce à une liaison 153 et à une entité de gestion de mobilité MME (« Mobility Management Entity » en anglais) 122 de la partie réseau cœur EPC 120 grâce à une liaison 152. Le système de télécommunication cellulaire EPS comporte typiquement une pluralité de telles passerelles SGW, à chacune de ces passerelles SGW étant connectée une pluralité de telles stations de base eNB. Le système de télécommunication cellulaire EPS comporte typiquement une pluralité de telles entités de gestion de mobilité MME, à chacune de ces entités de gestion de mobilité MME étant connectée une pluralité de passerelles SGW.

La partie réseau cœur EPC 120 comporte en outre au moins une passerelle PGW (« PDN Gateway » en anglais) 125 permettant d'accéder aux différents réseaux PDN, un serveur local de souscriptions HSS (« Home Subscriber Server » en anglais) 121, ainsi qu'un équipement PCRF (« Policy Control and Charging Rules Function » en anglais) 124 implémentant une fonction de contrôle de politiques et de règles de facturation. Le présent document s'intéresse plus particulièrement au contrôle de politiques de qualité de service QoS de cet équipement PCRF 124. Le système de télécommunication cellulaire EPS comporte typiquement une pluralité de telles passerelles PGW, à chacune de ces passerelles PGW étant connectée une pluralité de telles passerelles SGW et à chacune de ces passerelles SGW étant connectée une pluralité de telles passerelles PGW.

L'équipement PCRF 124 est en charge de prendre des décisions de contrôle de politiques de qualité de service QoS, ainsi que de contrôler des fonctionnalités de facturation implémentées dans une composante PCEF (« Policy Control Enforcement Function » en anglais) de chaque passerelle PGW. Les décisions de contrôle de politiques de qualité de service QoS sont ainsi appliquées par la composante PCEF de chaque passerelle PGW concernée.

L'entité MME 122 est un équipement en charge du plan de contrôle, et plus particulièrement d'opérations de signalisation, entre la partie réseau cœur EPC 120 du système de télécommunication cellulaire EPS et les équipements utilisateur UE connectés aux passerelles SGW dont l'entité MME 122 a la charge.

Le serveur HSS 121 est un équipement gestionnaire d'une base de données dans laquelle sont stockées des informations relatives à un profil de chaque utilisateur ayant effectué une souscription aux services du système de télécommunication cellulaire EPS, ainsi que des informations relatives à ladite souscription. Le serveur HSS 121 stocke notamment, pour chaque utilisateur, des informations quant aux réseaux PDN auxquels ledit utilisateur est autorisé à accéder par le biais de son équipement utilisateur UE. Le serveur HSS 121 stocke aussi notamment une information dynamique représentative de l'entité MME à laquelle ledit équipement utilisateur UE est actuellement rattaché. Le serveur HSS 121 peut aussi intégrer un centre d'authentification AUC (« AUthentication Center » en anglais), en charge de générer des vecteurs de clefs d'authentification et de sécurité.

La passerelle PGW 125 est notamment en charge d'allouer des adresses IP aux équipements utilisateur UE autorisés à accéder au(x) réseau(x) PDN au(x)quel(s) la passerelle PGW 125 donne accès. La passerelle PGW 125 est aussi notamment en charge de faire appliquer des politiques de qualité de service QoS vis-à-vis de porteuses radio à débit binaire garanti GBR (« Guaranteed Bit Rate » en anglais), et de permettre à un système de facturation en ligne OCS (« Online Charging System » en anglais) de collecter des données de facturation par flux de données, en fonction de règles fournies par l'équipement PCRF 124.

La passerelle SGW 123 est en charge de router les flux de données en provenance et à destination des équipements utilisateur UE connectés aux stations de base eNB sous la responsabilité de la passerelle SGW 123. La passerelle SGW 123 sert notamment de point d'ancrage de mobilité locale (« local mobility anchor » en anglais), lorsque l'équipement utilisateur UE 100 migre de la station de base eNB 111 à une autre station de base eNB sous la responsabilité de la passerelle SGW 123, et vice versa.

Sur le schéma de la Fig. 1, la passerelle SGW 123 est connectée à la passerelle PGW 125 grâce à une liaison 156. La passerelle SGW 123 est connectée à l'entité MME 122 grâce à une liaison 155. L'entité MME 122 est connectée au serveur HSS 121 grâce à une liaison 154. La passerelle PGW 125 est connectée à l'équipement PCRF 124 grâce à une liaison 158. L'équipement PCRF 124 est connecté au serveur HSS 121 grâce à une liaison 159. En outre, l'équipement PCRF 124 est connecté via une liaison 157 à un équipement AF (« Application Function » en anglais) 130, aussi appelé IMS (« IP Multimedia Subsystem » en anglais), qui se situe en dehors du cadre de la partie réseau cœur EPC 120, implémentant une fonction applicative.

Dans le cadre de la technologie LTE, les interfaces (ainsi que les formats de messages applicables) - aussi appelés « reference points » selon la terminologie anglo-saxonne de la technologie LTE - entre les différents éléments constituant le système de télécommunication cellulaire EPS sont standardisées. Notamment :

- l'interface entre la passerelle PGW 125 et l'équipement PCRF 124 est dénommée Gx et est définie dans les spécifications 3GPP TS 23.203: *« Policy and Charging Control Architecture »* et 3GPP TS 29.212 *« Policy and Charging Control (PCC); Reference Points »* ; et
- l'interface entre l'équipement PCRF 124 et l'équipement AF 130 est dénommée Rx et est définie dans les spécifications 3GPP TS 23.203: *« Policy and Charging Control Architecture »* et 3GPP TS 29.214 *« Policy and Charging Control over Rx Reference Point »*.

A noter que les interfaces Gx et Rx sont basées sur le protocole DIAMETER, tel que spécifié dans le document normatif RFC 3588, qui a été défini pour remplacer le protocole RADIUS (« Remote Authentication Dial-In User Service » en anglais), tel que spécifié dans les documents normatifs RFC 2865 et RFC 2866, dans des infrastructures de type AAA (« Authentication, Authorisation, Accounting/Auditing » en anglais).

A noter aussi que les liaisons entre la partie accès radio E-UTRAN 110 et la partie réseau cœur EPC 120, ainsi que les liaisons au sein de la partie réseau cœur EPC 120, et les liaisons entre la partie réseau cœur EPC 120 et l'équipement AF 130 sont des liaisons logiques. Cela signifie que des équipements réseau, tels que des routeurs ou des commutateurs, sont typiquement présents sur ces liaisons pour assurer les transmissions de paquets IP dans lesquels est encapsulé tout message échangé.

Un exemple d'échanges de messages au sein du système de télécommunication cellulaire EPS pour effectuer un établissement de porteuse radio par défaut, initié par l'équipement utilisateur UE 100, est schématiquement illustré sur la **Fig. 2A.** A noter en effet que les porteuses radio établies au sein du système de télécommunication cellulaire EPS sont de l'un des deux types suivants : porteuse radio par défaut (« default radio bearer » en anglais), pour laquelle il n'y a pas de débit binaire garanti, et porteuse radio dédiée (« dedicated radio bearer » en anglais), pour laquelle il y a ou pas de débit binaire garanti.

Dans une étape 201, l'équipement utilisateur UE 100 initie avec la station de base eNB 111 une procédure d'attachement (« attach procédure » en anglais). La station de base eNB 111 contacte l'entité MME 122, qui décide d'autoriser ou pas la création de la porteuse radio par défaut pour l'équipement utilisateur UE 100. L'entité MME 122 obtient des informations de souscription relatives à l'équipement utilisateur UE 100, sélectionne la passerelle SGW 123 comme point d'ancrage de mobilité locale pour l'équipement utilisateur UE 100, et instruit la passerelle SGW 123 de créer en interne l'environnement nécessaire au support de la porteuse radio par défaut pour l'équipement utilisateur UE 100. La passerelle SGW 123 transmet alors un message de requête de création de session (« Session Creation Request » en anglais) à la passerelle PGW 125. Cette procédure d'attachement et la transmission du message de requête de création de session à la passerelle PGW 125 sont schématisées par une unique flèche (201) sur la Fig. 2A par souci de simplification. A noter qu'une session définit un contexte de communication pour l'équipement utilisateur UE concerné vis-à-vis de l'accès au(x) réseau(x) PDN au(x)quel(s) la passerelle PGW 125 donne accès et au(x)quel(s) la souscription associée à l'équipement utilisateur UE concerné autorise l'accès. Chaque session inclut une porteuse radio par défaut et éventuellement une ou plusieurs porteuses radio dédiées.

Dans une étape 202 suivante, la passerelle PGW 125 initie auprès de l'équipement PCRF 124 une procédure d'établissement de session IP-CAN (« IP Connectivity Access Network Session Establishment » en anglais). La passerelle PGW 125 initie cette procédure par envoi d'un message dédié sur la liaison 158, *i.e.* via l'interface Gx. Ce message, appelé message CCR (« Credit Control Request » en anglais), contient en particulier des informations représentatives de paramètres de qualité de service QoS souhaités pour ladite porteuse radio par défaut. A noter que les messages CCR sont définis par le protocole DIAMETER, plus particulièrement dans le document normatif RFC 4006.

Lorsque l'équipement PCRF 124 reçoit le message d'initiation de la procédure d'établissement de session IP-CAN, l'équipement PCRF 124 effectue une vérification auprès du serveur HSS 121 que la souscription de l'utilisateur de l'équipement utilisateur UE 100 est conforme avec la session IP-CAN à établir. Pour ce faire, l'équipement PCRF 124 envoie un message de requête de profil au serveur HSS 121 dans une étape 203. Le serveur HSS 121 identifie le profil utilisateur concerné dans une étape 204, et en retire des informations sur la souscription de l'utilisateur de l'équipement utilisateur UE 100. Dans une étape 205, l'équipement PCRF 124 reçoit en réponse, en provenance du serveur HSS 121, les informations de souscription lui permettant d'effectuer ladite vérification. Si la souscription de l'utilisateur de l'équipement utilisateur UE 100 est conforme avec la session IP-CAN à établir, l'équipement PCRF 124 confirme, dans une étape 206, l'établissement de la session IP-CAN, en envoyant à la passerelle PGW 125 un message d'acquittement, appelé message CCA (« Credit Control Answer » en anglais), sur la liaison 158, *i.e.* via l'interface Gx. A noter que les messages CCA sont définis par le protocole DIAMETER, plus particulièrement dans le document normatif RFC 4006.

Dans une étape 207, la passerelle PGW 125 met en place les ressources nécessaires à l'établissement de session IP-CAN pour l'équipement utilisateur UE en question. En d'autres termes, la passerelle PGW 125, au travers de sa composante PCEF, implémente des opérations d'application de politique de qualité de service (« QoS Policy Enforcement » en anglais), en adéquation avec les besoins de la porteuse radio par défaut concernée.

L'acquittement est ensuite propagé par suite de messages depuis la passerelle PGW 125 jusqu'à l'équipement utilisateur UE 100, en passant par la passerelle SGW 123, l'entité MME 122 et la station de base eNB 111. Cet ensemble d'opérations constitue une procédure d'acquittement schématisée par une unique flèche (207) sur la Fig. 2A par souci de simplification.

Ensuite, dans une étape 208, de la signalisation se met en place entre la passerelle PGW 125 et l'équipement utilisateur UE 100. Puis, dans une étape 209 optionnelle, la passerelle PGW 125 transmet un message d'acquittement à l'équipement PCRF 124 pour lui signifier que l'établissement de la porteuse radio par défaut en question est terminé.

A noter aussi que la partie réseau cœur EPC peut être configurée selon un premier mode, dit *mode « simple »,* ou selon un second mode, dit *mode « piggy-back ».* Dans le mode « simple », les porteuses radio sont allouées, à la demande, les unes après les autres comme décrit ci-dessus. Dans le mode « piggy-back », la création d'une porteuse radio par défaut est accompagnée d'un envoi par l'équipement PCRF 124 à la passerelle PGW 125 de l'ensemble des politiques provisionnées pour l'utilisateur (et donc l'équipement utilisateur UE) concerné. Ces politiques décrivent toutes les porteuses radio, et les informations de qualité de service QoS qui leur sont applicables, autorisées pour l'utilisateur en question. La passerelle PGW 125 met alors en place les ressources nécessaires au support de toutes les porteuses radio provisionnées pour l'utilisateur (et donc l'équipement utilisateur UE) concerné.

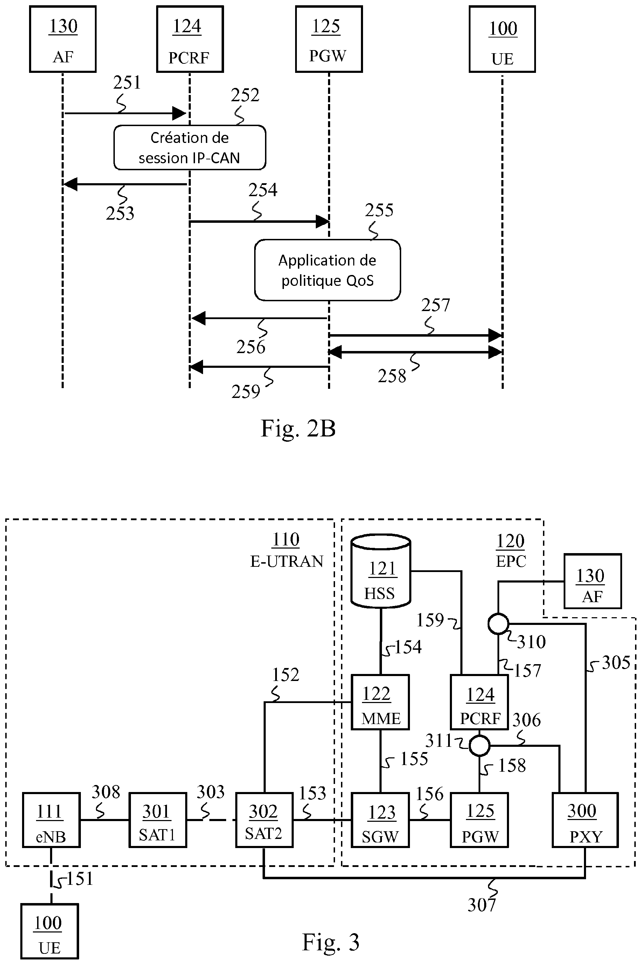

A noter aussi qu'un établissement de porteuse radio par défaut peut aussi être initié par l'équipement AF 130. Un exemple correspondant d'échanges de messages est schématiquement illustré sur la **Fig. 2B.**

Dans une étape 251, l'équipement AF 130 initie auprès de l'équipement PCRF 124 une procédure d'établissement de session IP-CAN. L'équipement AF 130 initie cette procédure par envoi d'un message, appelé message AAR (« Authentication Authorization Request » en anglais), sur la liaison 157, *i.e.* via l'interface Rx. A noter que les messages AAR sont définis par le protocole DIAMETER, plus particulièrement dans le document normatif RFC 4005. Sur réception de ce message, dans une étape 252, l'équipement PCRF 124 crée en conséquence une session IP-CAN, après une vérification d'adéquation entre des informations de caractéristiques de session fournies par l'équipement AF 130 dans ledit message et les politiques provisionnées pour l'utilisateur (et donc l'équipement utilisateur UE) concerné.

Dans une étape 253, l'équipement PCRF 124 envoie à l'équipement AF 130 un message d'acquittement, appelé message AAA (« Authentication Authorization Answer » en anglais), sur la liaison 157, *i.e.* via l'interface Rx. A noter que les messages AAA sont définis par le protocole DIAMETER, plus particulièrement dans le document normatif RFC 4005 L'équipement PCRF 124 confirme ainsi la prise en compte de la demande d'établissement de session IP-CAN formulée par l'équipement AF 130.

Dans une étape 254, l'équipement PCRF 124 initie une procédure d'établissement de session IP-CAN, concernant la porteuse radio par défaut à établir, auprès de la passerelle PGW 125. Cette procédure est initiée par l'envoi d'un message, appelé message RAR (« Re-Authentication Request » en anglais), sur la liaison 158, *i.e.* via l'interface Gx. A noter que les messages RAR sont définis par le protocole DIAMETER, plus particulièrement dans le document normatif RFC 4005.

Dans une étape 255, la passerelle PGW 125 met en place les ressources nécessaires à l'établissement de session IP-CAN pour l'équipement utilisateur UE en question. En d'autres termes, la passerelle PGW 125 implémente, au travers de sa composante PCEF, des opérations d'application de politique de qualité de service (« QoS Policy Enforcement » en anglais), en adéquation avec les besoins de la porteuse radio par défaut concernée.

Dans une étape 256, la passerelle PGW 125 envoie à l'équipement PCRF 124 un message d'acquittement, appelé message RAA (« Re-Authentication Answer » en anglais), sur la liaison 158, *i.e.* via l'interface Gx. A noter que les messages RAA sont définis par le protocole DIAMETER, plus particulièrement dans le document normatif RFC 4006.

Dans une étape 257, la passerelle PGW 125 instruit la mise en place de la session, et donc de la porteuse par défaut en question, par suite de messages depuis la passerelle PGW 125 jusqu'à l'équipement utilisateur UE 100, en passant par la passerelle SGW 123, l'entité MME 122 et la station de base eNB 111. Cet ensemble d'opérations est schématisé par une unique flèche (257) sur la Fig. 2B par souci de simplification.

Ensuite, dans une étape 258, de la signalisation se met en place entre la passerelle PGW 125 et l'équipement utilisateur UE 100. Puis, dans une étape 259 optionnelle, la passerelle PGW 125 transmet un message d'acquittement à l'équipement PCRF 124 pour lui signifier que l'établissement de la porteuse radio par défaut en question est terminé.

A noter qu'un établissement d'une ou plusieurs porteuses radio dédiées peut aussi être initié dans le cadre de la création de session telle que décrite ci-dessus, soit par l'équipement AF 130, soit par l'équipement utilisateur UE 100.

Le point commun entre ces différentes procédures pour établir des porteuses radio et permettre ainsi d'activer des chemins de données au sein du système de télécommunication cellulaire EPS est que l'équipement PCRF 124 est systématiquement sollicité et qu'en conséquence des échanges de messages interviennent sur la liaison 158, et éventuellement sur la liaison 157 lorsque l'équipement AF 130 est impliqué.

On peut particulièrement noter que ces différentes procédures pour établir des porteuses radio au sein du système de télécommunication cellulaire EPS est que l'équipement PCRF 124 s'appuie sur l'hypothèse que la liaison 153 qui relie la station de base eNB 111 et la passerelle SGW 123 ne présente pas de goulot d'étranglement (« bottleneck » en anglais) vis-à-vis de la qualité de service QoS des porteuses radio à établir.

Or, il est souhaitable d'apporter de la flexibilité dans le déploiement des stations de base eNB en installant une liaison sans-fil, comme une liaison satellite, entre lesdites stations de base eNB et la partie réseau cœur EPC 120. Cela est particulièrement le cas lorsque l'on souhaite installer temporairement une station de base eNB dans un lieu d'opérations hors de portée des stations de base eNB existantes, pour permettre à des équipes opérationnelles, e.g. secouristes, de communiquer via le système de télécommunication EPS sur le lieu d'opérations. Une difficulté se présente toutefois dans un tel contexte. En effet, cette liaison sans-fil peut constituer un goulot d'étranglement non prévu dans les échanges de messages définis actuellement pour établir des porteuses radio au sein du système de télécommunication cellulaire EPS. De plus, les capacités réelles de cette liaison sans-fil peuvent évoluer au fil du temps, en fonction notamment des conditions climatiques de l'environnement dans lequel ladite liaison sans-fil est établie. C'est le cas notamment des liaisons satellite à haut-débit, qui sont fortement perturbées par la pluie et le brouillard, et pour lesquelles une adaptation de modulation et de vitesse d'émission de signal doit être effectuée pour assurer la liaison, en fonction d'une atténuation de signal, ce qui peut induire une réduction de bande passante.

Il est souhaitable de pallier ces différents inconvénients de l'état de la technique. Il est ainsi souhaitable de fournir une solution qui permette de prendre en compte, vis-à-vis de la qualité de service QoS dans un tel système de télécommunication cellulaire EPS, qu'une ou plusieurs stations de base eNB soient déportées de la partie réseau cœur EPC grâce à une ou plusieurs liaisons sans-fil respectives. Il est en outre souhaitable que cette solution s'appuie sur l'architecture et les protocoles d'échanges de messages existants, *i.e.* qui ne nécessite pas de modification structurelle et comportementale de l'équipement PCRF, ni d'une quelconque passerelle PGW, ni d'une quelconque passerelle SGW, ni de l'entité MME.

L'invention concerne un procédé de gestion de bande passante dans un système de télécommunication cellulaire comportant : une partie accès radio comportant une pluralité de stations de base permettant à des équipements utilisateurs d'accéder à des services du système de télécommunication cellulaire pour lesquels des porteuses radio doivent être établies ; et une partie réseau cœur comportant un équipement de contrôle de politiques de qualité de service connecté via une première liaison à une passerelle via laquelle lesdites porteuses radio sont établies pour accéder auxdits services du système de télécommunication cellulaire. Le procédé est tel que, au moins une station de base étant déportée par liaison sans-fil, un équipement mandataire inclut dans le système de télécommunication cellulaire effectue les étapes suivantes : intercepter sur ladite première liaison chaque message d'établissement de session ou de mise à jour de session transmis entre l'équipement de contrôle de politiques de qualité de service et la passerelle ; lorsque ledit message ne concerne pas de porteuse radio impliquant une station de base déportée par une liaison sans-fil, propager ledit message vers son destinataire initialement ciblé, et lorsque ledit message concerne au moins une porteuse radio impliquant une station de base déportée par une liaison sans-fil : déterminer une bande passante restante via ladite liaison sans-fil ; lorsque la bande passante restante déterminée couvre un besoin en bande passante exprimé dans ledit message, propager ledit message vers son destinataire initialement ciblé ; et lorsque la bande passante restante déterminée ne couvre pas le besoin en bande passante, refuser, à la place de la destination d'origine dudit message, l'établissement ou la mise à jour de session lorsque la bande passante déterminée ne couvre pas un minimum de bande passante à garantir exprimé dans ledit message, et sinon, modifier ledit message, avant de le propager vers son destinataire initialement ciblé, en indiquant un besoin en bande passante au plus égal à la bande passante restante. Ainsi, il est pris en compte vis-à-vis de la qualité de service QoS qu'une ou plusieurs stations de base soient déportées de la partie réseau cœur grâce à une ou plusieurs liaisons sans-fil respectives. De plus, l'agencement de l'équipement mandataire au sein du système de télécommunication cellulaire est compatible avec une architecture et des protocoles d'échanges de messages existants, de sorte que l'équipement mandataire agisse de manière transparente au sein du système de télécommunication cellulaire.

Selon un mode de réalisation particulier, l'équipement mandataire intercepte tout message transitant sur la première liaison : en remplaçant, auprès de la passerelle, l'adresse de l'équipement de contrôle de politiques de qualité de service par l'adresse de l'équipement mandataire ; en remplaçant, auprès de l'équipement de contrôle de politiques de qualité de service, l'adresse de la passerelle par l'adresse de l'équipement mandataire ; et, lorsque l'équipement mandataire propage tout message intercepté sur la première liaison, l'équipement mandataire remplace l'adresse source dudit message par sa propre adresse et l'adresse destination dudit message par l'adresse de son destinataire initialement ciblé. Ainsi, l'équipement mandataire peut agir facilement de manière transparente vis-à-vis de l'équipement de contrôle de politiques de qualité de service et de la passerelle.

Selon un mode de réalisation particulier, le système de télécommunication cellulaire comportant en outre un équipement de fonction applicative connecté par une seconde liaison à l'équipement de contrôle de politiques de qualité de service, l'équipement mandataire effectue les étapes suivantes : intercepter sur ladite seconde liaison chaque message d'établissement de session ou de mise à jour de session transmis depuis l'équipement de fonction applicative vers l'équipement de contrôle de politiques de qualité de service ; lorsque ledit message ne concerne pas de porteuse radio impliquant une station de base déporté par une liaison sans-fil, propager ledit message vers son destinataire initialement ciblé, et lorsque ledit message concerne au moins une porteuse radio impliquant une station de base déporté par une liaison sans-fil : déterminer une bande passante restante via ladite liaison sans-fil ; lorsque la bande passante restante déterminée couvre un besoin en bande passante exprimé dans ledit message, propager ledit message vers son destinataire initialement ciblé ; et lorsque la bande passante restante déterminée ne couvre pas le besoin en bande passante, refuser, à la place de la destination d'origine dudit message, l'établissement ou la mise à jour de session. Ainsi, des échanges inutiles (au vu des capacités réelles de ladite liaison sans-fil) entre l'équipement de contrôle de politiques de qualité de service et la passerelle sont évités, toujours de manière transparente au sein du système de télécommunication cellulaire.

Selon un mode de réalisation particulier, l'équipement mandataire intercepte tout message transitant sur la seconde liaison : en remplaçant, auprès de l'équipement de fonction applicative, l'adresse de l'équipement de contrôle de politiques de qualité de service par l'adresse de l'équipement mandataire ; en remplaçant, auprès de l'équipement de contrôle de politiques de qualité de service, l'adresse de l'équipement de fonction applicative par l'adresse de l'équipement mandataire ; et, lorsque l'équipement mandataire propage tout message intercepté sur la seconde liaison, l'équipement mandataire remplace l'adresse source dudit message par sa propre adresse et l'adresse destination dudit message par l'adresse de son destinataire initialement ciblé. Ainsi, l'équipement mandataire peut agir facilement de manière transparente vis-à-vis de l'équipement de fonction applicative, et toujours de manière transparente pour l'équipement de contrôle de politiques de qualité de service.

Selon un mode de réalisation particulier, avant de rejeter un établissement ou une mise à jour de session, l'équipement mandataire cherche à dégrader ou à fermer une ou plusieurs porteuses radio passant via ladite liaison sans-fil, en émulant un envoi, par l'équipement de fonction applicative, respectivement d'un message de mise à jour de session ou d'un message de fermeture de session à destination de l'équipement de contrôle de politiques de qualité de service. Ainsi, l'équipement mandataire peut facilement fermer des sessions de moindre importance d'un point de vue opérationnel, toujours de manière transparente pour le reste du le système de télécommunication cellulaire.

Selon un mode de réalisation particulier, ladite liaison sans-fil étant établie entre un premier dispositif émetteur-récepteur et un second dispositif émetteur-récepteur, l'équipement mandataire détermine la bande passante restante via ladite liaison sans-fil en effectuant les étapes suivantes : interroger le premier dispositif émetteur-récepteur et/ou le second dispositif émetteur-récepteur pour obtenir une information de bande passante effective de ladite liaison sans-fil ; déterminer une bande passante utilisée via ladite liaison sans-fil en fonction de porteuses radio précédemment établies via ladite liaison sans-fil ; et déduire la bande passante restante à partir de la bande passante effective de ladite liaison sans-fil et de la bande passante utilisée via ladite liaison sans-fil. Ainsi, l'équipement mandataire peut facilement déterminer la bande passante restante via ladite liaison sans-fil.

Selon un mode de réalisation particulier, avant de rejeter un établissement ou une mise à jour de session, l'équipement mandataire cherche à dégrader ou à fermer une ou plusieurs porteuses radio passant via ladite liaison sans-fil, en émulant un envoi, par l'équipement de contrôle de politiques de qualité de service, respectivement d'un message de mise à jour de session ou d'un message de fermeture de session à destination de la passerelle. Ainsi, l'équipement mandataire peut aussi facilement fermer des sessions de moindre importance d'un point de vue opérationnel, toujours de manière transparente pour le reste du le système de télécommunication cellulaire.

Selon un mode de réalisation particulier, le système de télécommunication cellulaire comportant en outre un système de facturation en ligne connecté à ladite passerelle via une troisième liaison, avant de rejeter un établissement ou une mise à jour de session, l'équipement mandataire cherche à fermer une ou plusieurs porteuses radio passant via ladite liaison sans-fil, en émulant un envoi, par le système de facturation en ligne, d'un message de fermeture de session pour défaut de crédit à destination de la passerelle. Ainsi, l'équipement mandataire peut encore facilement fermer des sessions de moindre importance d'un point de vue opérationnel, toujours de manière transparente pour le reste du le système de télécommunication cellulaire.

Selon un mode de réalisation particulier, le système de télécommunication cellulaire comportant en outre un système de facturation hors ligne connecté à ladite passerelle via une quatrième liaison, avant de rejeter un établissement ou une mise à jour de session, l'équipement mandataire cherche à fermer une ou plusieurs porteuses radio passant via ladite liaison sans-fil, en émulant un envoi, par le système de facturation hors ligne, d'un message de fermeture de session pour défaut de crédit à destination de la passerelle. Ainsi, l'équipement mandataire peut encore facilement fermer des sessions de moindre importance d'un point de vue opérationnel, toujours de manière transparente pour le reste du le système de télécommunication cellulaire.

Selon un mode de réalisation particulier, lorsque l'équipement mandataire modifie un message d'établissement de session ou un message de mise à jour de session, l'équipement mandataire conserve une marge de bande passante par rapport à la bande passante restante, et l'équipement mandataire cherche à dégrader et/ou à fermer une ou plusieurs porteuses radio lorsque l'équipement mandataire détecte une baisse de bande passante restante sur ladite liaison sans-fil en dessous d'un premier seuil prédéfini inférieur à ladite marge. Ainsi, le système de télécommunication cellulaire s'adapte aux dégradations de conditions de transmission via ladite liaison sans-fil.

Selon un mode de réalisation particulier, lorsque l'équipement mandataire modifie un message d'établissement de session ou un message de mise à jour de session, l'équipement mandataire conserve une marge de bande passante par rapport à la bande passante restante, et l'équipement mandataire cherche à dégrader et/ou à fermer une ou plusieurs porteuses radio lorsque l'équipement mandataire détecte une baisse de bande passante restante qui suit une pente menant dans un laps de temps prédéfini à une bande passante restante estimée inférieure à un premier seuil prédéfini inférieur à ladite marge. Ainsi, le système de télécommunication cellulaire anticipe des dégradations de conditions de transmission via ladite liaison sans-fil.

Selon un mode de réalisation particulier, l'équipement mandataire cherche à améliorer et/ou à restaurer une ou plusieurs porteuses radio précédemment dégradées par l'équipement mandataire, lorsque l'équipement mandataire détecte une hausse de bande passante restante sur ladite liaison sans-fil au-dessus d'un second seuil prédéfini supérieur à ladite marge. Ainsi, le système de télécommunication cellulaire s'adapte aux améliorations de conditions de transmission via ladite liaison sans-fil.

Selon un mode de réalisation particulier, le système de télécommunication cellulaire est de type LTE et ladite liaison sans-fil est une liaison satellite.

L'invention concerne également un équipement mandataire destiné à être intégré dans un système de télécommunication cellulaire comportant : une partie accès radio comportant une pluralité de stations de base permettant à des équipements utilisateurs d'accéder à des services du système de télécommunication cellulaire pour lesquels des porteuses radio doivent être établies ; et une partie réseau cœur comportant un équipement de contrôle de politiques de qualité de service connecté via une première liaison à une passerelle via laquelle lesdites porteuses radio sont établies pour accéder auxdits services du système de télécommunication cellulaire, l'équipement mandataire est tel que, au moins une station de base étant déportée par liaison sans-fil, l'équipement mandataire inclut : des moyens pour intercepter sur ladite première liaison chaque message d'établissement de session ou de mise à jour de session transmis entre l'équipement de contrôle de politiques de qualité de service et la passerelle ; lorsque ledit message ne concerne pas de porteuse radio impliquant une station de base déportée par une liaison sans-fil, des moyens pour propager ledit message vers son destinataire initialement ciblé, et lorsque ledit message concerne au moins une porteuse radio impliquant une station de base déportée par une liaison sans-fil : des moyens pour déterminer une bande passante restante via ladite liaison sans-fil ; lorsque la bande passante restante déterminée couvre un besoin en bande passante exprimé dans ledit message, des moyens pour propager ledit message vers son destinataire initialement ciblé ; et lorsque la bande passante restante déterminée ne couvre pas le besoin en bande passante, des moyens pour refuser, à la place de la destination d'origine dudit message, l'établissement ou la mise à jour de session lorsque la bande passante déterminée ne couvre pas un minimum de bande passante à garantir exprimé dans ledit message, et sinon, des moyens pour modifier ledit message, avant de le propager vers son destinataire initialement ciblé, en indiquant un besoin en bande passante au plus égal à la bande passante restante.

L'invention concerne également un système de télécommunication cellulaire comportant : une partie accès radio comportant une pluralité de stations de base permettant à des équipements utilisateurs d'accéder à des services du système de télécommunication cellulaire pour lesquels des porteuses radio doivent être établies ; et une partie réseau cœur comportant un équipement de contrôle de politiques de qualité de service connecté via une première liaison à une passerelle via laquelle lesdites porteuses radio sont établies pour accéder auxdits services du système de télécommunication cellulaire. Ledit système de télécommunication cellulaire est tel que, au moins une station de base étant déportée par liaison sans-fil, ledit système inclut l'équipement mandataire tel que mentionné ci-dessus.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme est exécuté par ledit processeur. L'invention concerne également des moyens de stockage sur lesquels est stocké un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système de télécommunication cellulaire, selon l'état de la technique ;
- la Fig. 2A illustre schématiquement des premiers échanges intervenant dans le système de télécommunication cellulaire de la Fig. 1, selon l'état de la technique ;
- la Fig. 2B illustre schématiquement des seconds échanges intervenant dans le système de télécommunication cellulaire de la Fig. 1, selon l'état de la technique ;
- la Fig. 3 illustre schématiquement un système de télécommunication cellulaire, selon un mode de réalisation de la présente invention ;
- la Fig. 4A illustre schématiquement des premiers échanges intervenant dans le système de télécommunication cellulaire de la Fig. 3, selon un mode de réalisation de la présente invention ;
- la Fig. 4B illustre schématiquement des seconds échanges intervenant dans le système de télécommunication cellulaire de la Fig. 3, selon un mode de réalisation de la présente invention ;
- la Fig. 5 illustre schématiquement un premier algorithme, implémenté par un équipement mandataire du système de télécommunication cellulaire de la Fig. 3, pour traiter des premiers messages interceptés ;
- la Fig. 6 illustre schématiquement un second algorithme, implémenté par l'équipement mandataire, pour traiter des seconds messages interceptés ;
- les Figs. 7A et 7B illustrent schématiquement des algorithmes, implémentés par l'équipement mandataire, pour libérer de la bande passante au sein du système de télécommunication cellulaire de la Fig. 3 ;
- les Figs. 8A et 8B illustrent schématiquement deux alternatives, complémentaires au système de télécommunication cellulaire de la Fig. 3 ;
- la Fig. 9 illustre schématiquement un autre algorithme, implémenté par l'équipement mandataire, pour libérer de la bande passante au sein du système de télécommunication cellulaire de la Fig. 8A et/ou de la Fig. 8B ; et
- la Fig. 10 illustre schématiquement un exemple d'architecture matérielle de l'équipement mandataire.

Pour atteindre les objectifs susmentionnés, il est proposé d'intégrer un équipement mandataire au sein du système de télécommunication cellulaire EPS considéré. Cet équipement mandataire intercepte des messages échangés entre l'équipement PCRF 124 et la passerelle PGW 125 de manière à détecter des établissements de sessions ou des mises à jour de sessions qui seraient incompatibles avec les capacités effectives d'une liaison sans-fil éventuellement utilisée pour déporter une station de base impliquée par ces sessions (et donc par les porteuses radio qui la composent). En cas d'incompatibilité totale, l'équipement mandataire rejette l'établissement de session ou la mise à jour de session à la place du destinataire initialement ciblé par le message intercepté. En cas d'incompatibilité partielle, l'équipement mandataire modifie le message intercepté pour le rendre compatible avec les capacités effectives de ladite liaison sans-fil, et le propage au destinataire initialement ciblé par le message intercepté. Avant de rejeter un établissement ou une mise à jour de session, l'équipement mandataire peut décider de dégrader voire de fermer une ou plusieurs porteuses radio précédemment établies via ladite liaison sans-fil, e.g. des porteuses radio qui auraient un plus faible niveau de priorité associé. L'équipement mandataire peut aussi décider de dégrader voire de fermer une ou plusieurs porteuses radio précédemment établies lorsque les capacités effectives de ladite liaison sans-fil baissent à cause de variations de conditions climatiques défavorables. L'équipement mandataire peut alors aussi décider d'améliorer ou de restaurer une ou plusieurs porteuses radio précédemment dégradées lorsque les capacités effectives de ladite liaison sans-fil augmentent à cause de variations de conditions climatiques favorables.

La **Fig. 3** illustre schématiquement un système de télécommunication cellulaire EPS, selon un mode de réalisation de la présente invention. On retrouve sur la Fig. 3 les différents éléments déjà présentés en relation avec la Fig. 1, à savoir l'équipement utilisateur UE 100, la station de base eNB 111, la passerelle SGW 123, le serveur HSS 121, l'entité MME 122, la passerelle PGW 125, l'équipement PCRF 124 et l'équipement AF 130. Au niveau de la partie réseau cœur EPC 120, ces éléments sont interconnectés comme déjà présenté en relation avec la Fig. 1.

Par rapport au schéma de la Fig. 1, la partie accès radio E-UTRAN 110 est modifiée pour faire apparaître une liaison sans-fil 303 permettant de faciliter le déploiement de la station de base eNB 111. Cette liaison sans-fil 303 est réalisée grâce à un couple de dispositifs émetteurs-récepteurs (« transceiver » en anglais) SAT1 301 et SAT2 302. La liaison sans-fil 303 est préférentiellement une liaison satellite. Le dispositif émetteur-récepteur SAT1 301 est connecté à la station de base eNB 111 par une liaison 308 de bande passante au moins égale à la bande passante maximale que peut offrir la liaison sans-fil 303. En d'autres termes, la liaison 308 n'est pas vue comme un goulot d'étranglement par rapport à la capacité effective de la liaison sans-fil 303. Le dispositif émetteur-récepteur SAT2 302 est connecté à l'entité MME 122 par la liaison 152, ainsi qu'à la passerelle SGW 123 par la liaison 153. La station de base eNB 111 est donc ainsi apte à échanger des messages et des données avec la passerelle SGW 123 et avec l'entité MME 122, l'inclusion de la liaison sans-fil 303 dans la partie accès radio E-UTRAN 110 étant transparente vis-à-vis de la station de base eNB 111, de la passerelle SGW 123 et de l'entité MME 122.

Par rapport au schéma de la Fig. 1, la partie réseau cœur EPC a été modifiée par ajout d'un équipement mandataire («proxy» en anglais) PXY 300. L'équipement mandataire PXY 300 est connecté, via une liaison 305, à un premier équipement réseau (*e.g.* routeur ou commutateur) 310 présent sur la liaison 157. L'équipement mandataire PXY 300 est aussi connecté, via une liaison 306, à un second équipement réseau (*e.g.* routeur ou commutateur) 311 présent sur la liaison 158. L'équipement mandataire PXY 300 est enfin connecté, via une liaison 307, au dispositif émetteur-récepteur SAT2 302. A noter que l'équipement mandataire PXY 300 peut aussi être considéré comme étant situé en dehors du cadre de la partie réseau cœur EPC 120.

La liaison 307 permet à l'équipement mandataire PXY 300 d'obtenir, auprès du dispositif émetteur-récepteur SAT2 302, des informations représentatives des capacités effectives de la liaison sans-fil 303. A noter qu'une variante de réalisation consiste à établir la liaison 307 entre l'équipement mandataire PXY 300 et le dispositif émetteur-récepteur SAT1 301, afin que le dispositif émetteur-récepteur SAT1 301 fournisse à l'équipement mandataire PXY 300 lesdites informations représentatives des capacités effectives de la liaison sans-fil 303. La liaison 307 peut aussi connecter l'équipement mandataire PXY 300 avec le dispositif émetteur-récepteur SAT1 301 et avec le dispositif émetteur-récepteur SAT2 302 (par exemple, un desdits dispositifs émetteurs-récepteurs pouvant fournir des informations représentatives des capacités effectives de la liaison sans-fil 303 dans un sens de communication, et l'autre desdits dispositifs émetteurs-récepteurs pouvant fournir des informations représentatives des capacités effectives de la liaison sans-fil 303 dans l'autre sens de communication).

Comme détaillé par la suite, l'équipement mandataire PXY 300 intercepte, et éventuellement modifie pour prendre en compte des capacités effectives de liaisons sans-fil utilisées pour déporter des stations de base eNBs, des messages qui transitent sur la liaison 158, *i.e.* sur l'interface Gx dans le cadre de la technologie LTE. Pour opérer comme dans le cadre de la Fig. 1, le système de télécommunication cellulaire EPS est tel que l'équipement PCRF 124 est supposé avoir connaissance de l'adresse IP de la passerelle PGW 125, et vice versa. Pour pouvoir intercepter les messages sur la liaison 158, le système de télécommunication cellulaire EPS est tel que l'adresse IP de la passerelle PGW 125 est remplacée par l'adresse IP de l'équipement mandataire PXY 300 auprès de l'équipement PCRF 124, et l'adresse IP de l'équipement PCRF 124 est remplacée par l'adresse IP de l'équipement mandataire PXY 300 auprès de la passerelle PGW 125. L'équipement PCRF 124 croit ainsi échanger des messages avec la passerelle PGW 125, alors que, dans les faits, l'équipement PCRF 124 échange ces messages avec l'équipement mandataire PXY 300. De même, la passerelle PGW 125 croit ainsi échanger des messages avec l'équipement PCRF 124, alors que, dans les faits, la passerelle PGW 125 échange ces messages avec l'équipement mandataire PXY 300. Ainsi, lorsque l'équipement mandataire PXY 300 renvoie un message intercepté à destination de l'équipement PCRF 124, l'équipement mandataire PXY 300 inscrit comme adresse IP destination (qui était alors sa propre adresse IP) l'adresse IP de l'équipement PCRF 124 et inscrit comme adresse IP source (qui était l'adresse IP de la passerelle PGW 125) sa propre adresse IP. De plus, lorsque l'équipement mandataire PXY 300 renvoie un message intercepté à destination de la passerelle PGW 125, l'équipement mandataire PXY 300 inscrit comme adresse IP destination (qui était alors sa propre adresse IP) l'adresse IP de la passerelle PGW 125 et inscrit comme adresse IP source (qui était l'adresse IP de l'équipement PCRF 124) sa propre adresse IP.

A noter que la présence du second équipement réseau 311 sur la liaison 158 n'est pas strictement nécessaire.

Dans une variante de réalisation, le second équipement réseau 311 est configuré pour dérouter vers l'équipement mandataire PXY 300 les messages transitant sur la liaison 158, *i.e.* sur l'interface Gx dans le cadre de la technologie LTE. Par exemple, le second équipement réseau 311 dispose d'une liaison dédiée avec l'équipement mandataire PXY 300, par exemple sous la forme d'un tunnel. Le second équipement réseau 311 encapsule et transmet alors via ce tunnel tout message entrant. Le second équipement réseau 311 des-encapsule tout message issu du tunnel et le propage comme si le message n'avait pas été dérouté vers l'équipement mandataire PXY 300. Il n'est ainsi pas nécessaire de leurrer l'adresse IP de l'équipement PCRF 124 auprès de la passerelle PGW 125, ni de leurrer l'adresse IP de la passerelle PGW 125 auprès de l'équipement PCRF 124.

Dans un mode de réalisation particulier détaillé par la suite, l'équipement mandataire PXY 300 intercepte aussi des messages qui transitent sur la liaison 157, *i.e.* sur l'interface Rx dans le cadre de la technologie LTE. Pour opérer comme dans le cadre de la Fig. 1, le système de télécommunication cellulaire EPS est tel que l'équipement PCRF 124 est supposé avoir connaissance de l'adresse IP de l'équipement AF 130, et vice versa. Pour pouvoir intercepter les messages sur la liaison 157, le système de télécommunication cellulaire EPS est tel que l'adresse IP de l'équipement AF 130 est remplacée par l'adresse IP de l'équipement mandataire PXY 300 auprès de l'équipement PCRF 124, et l'adresse IP de l'équipement PCRF 124 est remplacée par l'adresse IP de l'équipement mandataire PXY 300 auprès de l'équipement AF 130. L'équipement PCRF 124 croit ainsi échanger des messages avec l'équipement AF 130, alors que, dans les faits, l'équipement PCRF 124 échange ces messages avec l'équipement mandataire PXY 300. De même, l'équipement AF 130 croit ainsi échanger des messages avec l'équipement PCRF 124, alors que, dans les faits, l'équipement AF 130 échange ces messages avec l'équipement mandataire PXY 300. Ainsi, lorsque l'équipement mandataire PXY 300 renvoie un message intercepté à destination de l'équipement PCRF 124, l'équipement mandataire PXY 300 inscrit comme adresse IP destination (qui était alors sa propre adresse IP) l'adresse IP de l'équipement PCRF 124 et inscrit comme adresse IP source (qui était l'adresse IP de l'équipement AF 130) sa propre adresse IP. De plus, lorsque l'équipement mandataire PXY 300 renvoie un message intercepté à destination de l'équipement AF 130, l'équipement mandataire PXY 300 inscrit comme adresse IP destination (qui était alors sa propre adresse IP) l'adresse IP de l'équipement AF 130 et inscrit comme adresse IP source (qui était l'adresse IP de l'équipement PCRF 124) sa propre adresse IP.

A noter que la présence du premier équipement réseau 310 sur la liaison 157 n'est pas strictement nécessaire.

Dans une variante de réalisation, le premier équipement réseau 310 est configuré pour dérouter vers l'équipement mandataire PXY 300 les messages transitant sur la liaison 157, *i.e.* sur l'interface Rx dans le cadre de la technologie LTE, et le second équipement réseau 311 est configuré pour dérouter vers l'équipement mandataire PXY 300 les messages transitant sur la liaison 158, *i.e.* sur l'interface Gx dans le cadre de la technologie LTE. Par exemple, le premier équipement réseau 310 et le second équipement réseau 311 disposent chacun d'une liaison dédiée avec l'équipement mandataire PXY 300, par exemple sous la forme d'un tunnel. Le premier équipement réseau 310 et le second équipement réseau 311 encapsulent et transmettent alors via leurs tunnels respectifs tout message entrant. Le premier équipement réseau 310 et le second équipement réseau 311 des-encapsulent tout message issu de leurs tunnels respectifs et le propage comme si le message n'avait pas été dérouté vers l'équipement mandataire PXY 300. Il n'est ainsi pas nécessaire de leurrer l'adresse IP de l'équipement PCRF 124 auprès de la passerelle PGW 125, ni de leurrer l'adresse IP de la passerelle PGW 125 auprès de l'équipement PCRF 124.

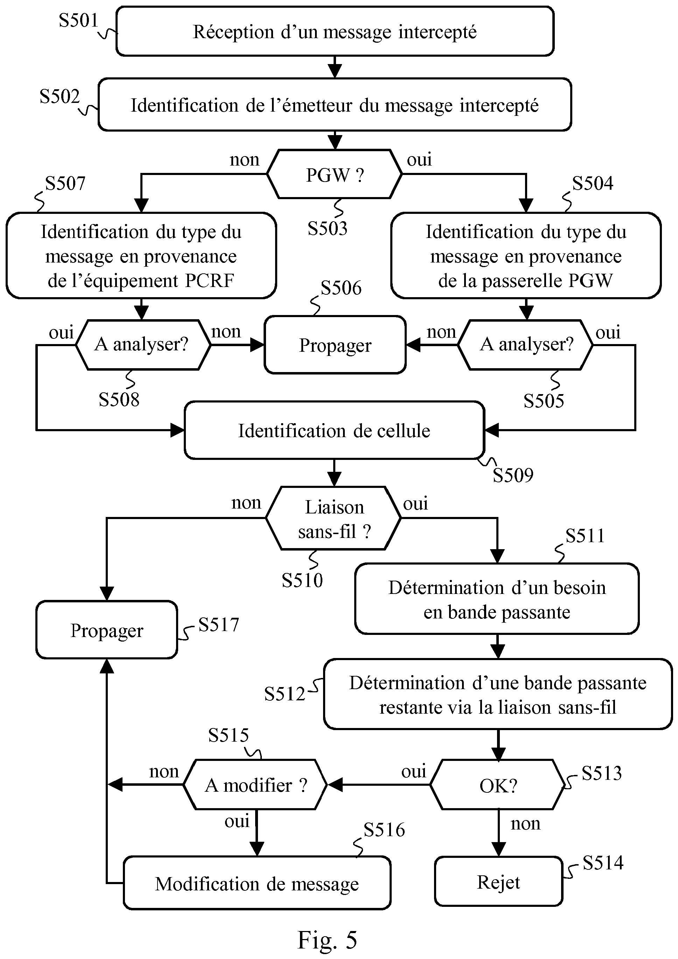

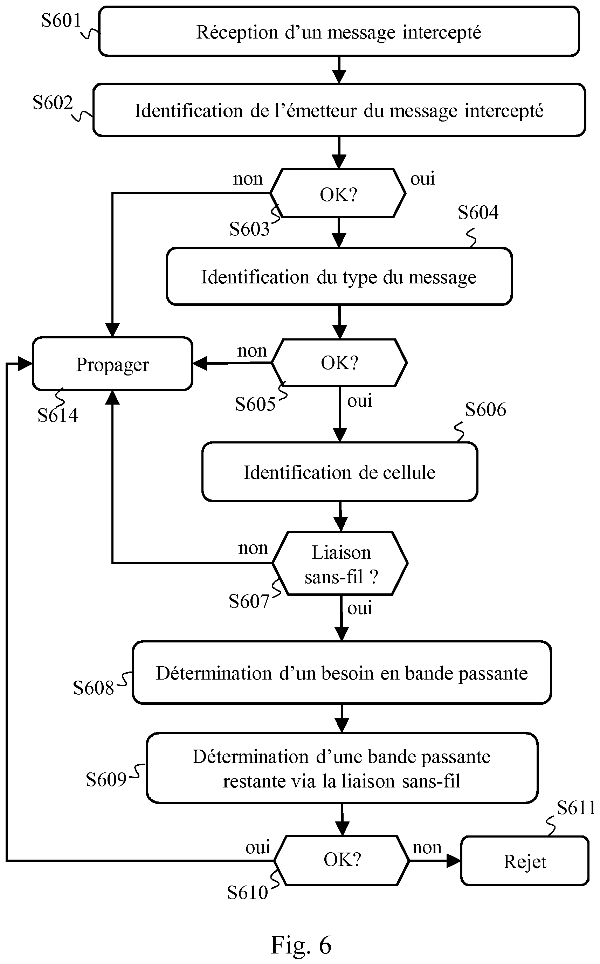

Ainsi, de manière transparente pour l'équipement PCRF 124, pour la passerelle PGW 125 et pour l'équipement AF 130, l'équipement mandataire PXY 300 intercepte des messages qui transitent sur la liaison 158, *i.e.* sur l'interface Gx dans le cadre de la technologie LTE, et intercepte éventuellement des messages qui transitent sur la liaison 157, *i.e.* sur l'interface Rx dans le cadre de la technologie LTE. Etant donné que l'équipement mandataire PXY 300 a connaissance des capacités effectives de la liaison sans-fil 303 grâce aux échanges avec le dispositif émetteur-récepteur SAT2 302 (ou avec le dispositif émetteur-récepteur SAT1 301) via la liaison 307, l'équipement mandataire PXY 300 est en position de pouvoir modifier lesdits messages, qui transitent sur la liaison 158 et éventuellement sur la liaison 157, pour prendre en compte lesdites capacités effectives de la liaison sans-fil 303. Cet aspect est détaillé ci-après en relation avec les Figs. 5 et 6.

Dans un mode de réalisation particulier, l'équipement mandataire PXY 300 est co-localisé ou est connecté à un dispositif d'orchestration. L'un peut être inclus dans l'autre. Le dispositif d'orchestration implémente une fonction de virtualisation réseau NVF (« Network Virtualisation Function » en anglais). Un tel dispositif d'orchestration est par exemple conforme aux spécifications ETSI GS NFV-MAN 001 *« Network Functions Virtualisation (NFV); Management and Orchestration »*. Le dispositif d'orchestration vise à simplifier le processus d'approvisionnement et de contrôle des applications et des services au sein du système de télécommunication cellulaire EPS. Le dispositif d'orchestration est configuré pour surveiller en continu l'activité du système de télécommunication cellulaire EPS, et plus particulièrement les établissements et fermetures de sessions et porteuses radio correspondantes, pour chaque utilisateur dont la souscription aux services du système de télécommunication cellulaire EPS est déclarée auprès du serveur HSS 121, ainsi que la localisation de l'équipement utilisateur UE dudit utilisateur au sein du système de télécommunication cellulaire EPS (*i.e.* la station de base eNB via laquelle ledit équipement utilisateur UE accède aux services du système de télécommunication cellulaire EPS). Le dispositif d'orchestration est ainsi configuré pour informer l'équipement mandataire PXY 300 des sessions et porteuses radio correspondantes qui ont été établies, ainsi que de leurs caractéristiques, en particulier de la bande passante qui leur est respectivement allouée et préférentiellement d'un niveau de priorité qui leur est respectivement associé. Le dispositif d'orchestration peut construire cette connaissance à partir d'informations fournies par l'équipement mandataire PXY 300. En effet, l'équipement mandataire PXY 300 interceptant les messages transitant par la liaison 158, *i.e.* sur l'interface Gx dans le cadre de la technologie LTE, et éventuellement les messages transitant par la liaison 157, *i.e.* sur l'interface Rx dans le cadre de la technologie LTE, l'équipement mandataire PXY 300 peut informer le dispositif d'orchestration des établissements de sessions et porteuses radio correspondantes, de leurs caractéristiques respectives. L'équipement mandataire PXY 300 peut de la même manière informer le dispositif d'orchestration de modifications apportées auxdites sessions et porteuses radio correspondantes, ainsi que de leur fermetures. Le dispositif d'orchestration maintient alors, pour le compte de l'équipement mandataire PXY 300, une représentation de l'activité du système de télécommunication cellulaire EPS. Le dispositif d'orchestration est en outre configuré pour indiquer à l'équipement mandataire PXY 300 quelles sont les stations de base eNB qui sont déportées par liaison sans-fil. Le dispositif d'orchestration peut construire cette connaissance à partir d'informations fournies par configuration manuelle. Le dispositif d'orchestration est en outre configuré pour indiquer à l'équipement mandataire PXY 300 dans quelle cellule est localisé tel ou tel équipement utilisateur UE. Le dispositif d'orchestration peut construire cette connaissance à partir d'informations fournies par l'équipement mandataire PXY 300. En effet, l'équipement mandataire PXY 300 interceptant les messages transitant par la liaison 158, *i.e.* sur l'interface Gx dans le cadre de la technologie LTE, l'équipement mandataire PXY 300 peut informer le dispositif d'orchestration des attachements et détachements d'équipements utilisateur UE. A noter que les messages de mise à jour de session à l'initiative de l'équipement utilisateur UE transitant par la liaison 158 fournissent aussi une information de localisation (cellule) de l'équipement utilisateur UE.

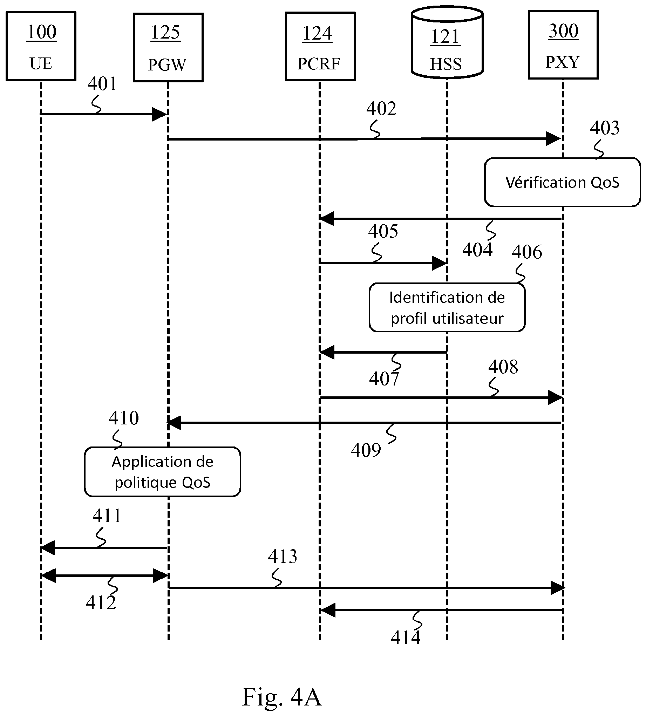

Un exemple d'échanges de messages au sein du système de télécommunication cellulaire EPS pour effectuer un établissement de porteuse radio par défaut, initié par l'équipement utilisateur UE 100, est schématiquement illustré sur la **Fig. 4A.**

Dans une étape 401, l'équipement utilisateur UE 100 initie avec la station de base eNB 111 une procédure d'attachement (« attach procédure » en anglais). La station de base eNB 111 contacte l'entité MME 122, qui décide d'autoriser ou pas la création de la porteuse radio par défaut pour l'équipement utilisateur UE 100. L'entité MME 122 obtient des informations de souscription relatives à l'équipement utilisateur UE 100, sélectionne la passerelle SGW 123 comme point d'ancrage de mobilité locale pour l'équipement utilisateur UE 100, et instruit la passerelle SGW 123 de créer en interne l'environnement nécessaire au support de la porteuse radio par défaut pour l'équipement utilisateur UE 100. La passerelle SGW 123 transmet alors un message de requête de création de session (« Session Creation Request » en anglais) à la passerelle PGW 125. Cette procédure d'attachement et la transmission du message de requête de création de session à la passerelle PGW 125 sont schématisées par une unique flèche (401) sur la Fig. 4A par souci de simplification.

Dans une étape 402 suivante, la passerelle PGW 125 cherche à initier auprès de l'équipement PCRF 124 une procédure d'établissement de session IP-CAN. La passerelle PGW 125 initie cette procédure par envoi d'un message dédié sur la liaison 158. Dans le cadre de la technologie LTE, la passerelle PGW 125 envoie un message CCR via l'interface Gx. Ce message contient en particulier des informations représentatives de paramètres de qualité de service QoS souhaités pour ladite porteuse radio par défaut. Bien que destiné à l'équipement PCRF 124, ce message est intercepté par l'équipement mandataire PXY 300.

Dans une étape 403 (telle que détaillée ci-après en relation avec la Fig. 5), l'équipement mandataire PXY 300 analyse les informations représentatives des paramètres de qualité de service QoS souhaités pour ladite porteuse radio par défaut qui sont contenues dans ledit message intercepté, et les compare avec les capacités effectives de la liaison sans-fil 303, en tenant compte des porteuses radio déjà établies via ladite liaison sans-fil 303. L'équipement mandataire PXY 300 décide alors en conséquence si ladite porteuse radio par défaut peut être établie, ou pas, au vu des capacités effectives de la liaison sans-fil 303 et dans quelles conditions ladite porteuse radio par défaut peut être établie.

Si l'équipement mandataire PXY 300 décide que ladite porteuse radio par défaut ne peut pas être établie au vu des capacités effectives de la liaison sans-fil 303, l'équipement mandataire PXY 300 rejette la procédure d'établissement de session IP-CAN en répondant à la passerelle PGW 125 à la place de l'équipement PCRF 124. Dans le cadre de la technologie LTE, l'équipement mandataire PXY 300 rejette la procédure d'établissement de session IP-CAN en envoyant à la passerelle PGW 125 via l'interface Gx un message CCA représentatif d'une réponse négative.

Si l'équipement mandataire PXY 300 décide que ladite porteuse radio par défaut peut être établie au vu des capacités effectives de la liaison sans-fil 303, l'équipement mandataire PXY 300 modifie éventuellement les informations représentatives des paramètres de qualité de service QoS souhaités pour ladite porteuse radio par défaut qui sont contenues dans ledit message intercepté, afin de les ajuster aux capacités effectives de la liaison sans-fil 303. Ensuite, dans une étape 404, l'équipement mandataire PXY 300 renvoie le message, éventuellement modifié pour prendre en compte les capacités effectives de la liaison sans-fil 303, à destination de l'équipement PCRF 124 via la liaison 158.

Lorsque l'équipement PCRF 124 reçoit le message d'initiation de la procédure d'établissement de session IP-CAN (éventuellement modifié par l'équipement mandataire PXY 300 pour prendre en compte les capacités effectives de la liaison sans-fil 303), l'équipement PCRF 124 effectue une vérification auprès du serveur HSS 121 que la souscription de l'utilisateur de l'équipement utilisateur UE 100 est conforme avec la session IP-CAN à établir. Pour ce faire, l'équipement PCRF 124 envoie un message de requête de profil au serveur HSS 121 dans une étape 405. Le serveur HSS 121 identifie le profil utilisateur concerné dans une étape 406, et en retire des informations sur la souscription de l'utilisateur de l'équipement utilisateur UE 100. Dans une étape 407, l'équipement PCRF 124 reçoit en provenance du serveur HSS 121 des informations de souscription lui permettant d'effectuer ladite vérification. Si la souscription de l'utilisateur de l'équipement utilisateur UE 100 est conforme avec la session IP-CAN à établir, l'équipement PCRF 124 confirme, dans une étape 408, l'établissement de la session IP-CAN, en envoyant à destination de la passerelle PGW 125 un message d'acquittement dédié sur la liaison 158. Dans le cadre de la technologie LTE, l'équipement PCRF 124 envoie via l'interface Gx un message CCA représentatif d'une réponse positive. Bien que destiné à la passerelle PGW 125, ce message d'acquittement est intercepté par l'équipement mandataire PXY 300. L'équipement mandataire PXY 300 détecte que le message intercepté est un message d'acquittement, qui fait donc suite à un message de requête qui a été précédemment intercepté et qui a déjà été traité par l'équipement mandataire PXY 300. L'équipement mandataire PXY 300 peut alors savoir si l'équipement PCRF 124 a accepté, ou pas, l'établissement de la session IP-CAN. En effet, dans l'éventualité où l'équipement PCRF 124 rejette l'établissement de la session IP-CAN, l'équipement PCRF 124 envoie un message de réponse négative à destination de la passerelle PGW 125, qui est aussi intercepté par l'équipement mandataire PXY 300. Dans ce cas, dans le cadre de la technologie LTE, l'équipement PCRF 124 envoie via l'interface Gx un message CCA représentatif d'une réponse négative.

Dans une étape 409, l'équipement mandataire PXY 300 renvoie alors ledit message d'acquittement à destination de la passerelle PGW 125 via la liaison 158.

Dans une étape 410, la passerelle PGW 125 met en place les ressources nécessaires à l'établissement de la session IP-CAN pour l'équipement utilisateur UE en question. En d'autres termes, la passerelle PGW 125 implémente, grâce à sa composante PCEF, des opérations d'application de politique de qualité de service (« QoS Policy Enforcement » en anglais), en adéquation avec les besoins de la porteuse radio par défaut concernée.

L'acquittement est ensuite propagé par suite de messages depuis la passerelle PGW 125 jusqu'à l'équipement utilisateur UE 100, en passant par la passerelle SGW 123, l'entité MME 122 et la station de base eNB 111. Cet ensemble d'opérations constitue une procédure d'acquittement schématisée par une unique flèche (411) sur la Fig. 4A par souci de simplification.

Ensuite, dans une étape 412, de la signalisation se met en place entre la passerelle PGW 125 et l'équipement utilisateur UE 100. Puis, dans une étape 413 optionnelle, la passerelle PGW 125 transmet un message d'acquittement à destination de l'équipement PCRF 124 via la liaison 158, pour lui signifier que l'établissement de la porteuse radio par défaut en question est terminé. Dans le cadre de la technologie LTE, ce message d'acquittement est un message CCR transmis via l'interface Gx. Bien que destiné à l'équipement PCRF 124, ce message d'acquittement est intercepté par l'équipement mandataire PXY 300. L'équipement mandataire PXY 300 détecte que le message intercepté est un message d'acquittement, qui fait donc suite à un message de requête qui a été précédemment intercepté et qui a déjà été traité par l'équipement mandataire PXY 300. L'équipement mandataire PXY 300 peut alors savoir si l'établissement de la porteuse radio par défaut en question s'est correctement terminé ou pas.

Dans une étape 411, l'équipement mandataire PXY 300 renvoie alors ledit message d'acquittement à destination de l'équipement PCRF 124 via la liaison 158.

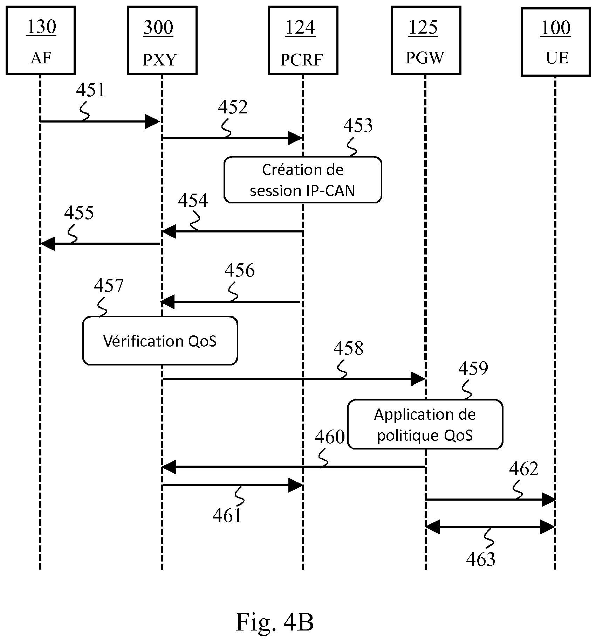

A noter aussi qu'un établissement de porteuse radio par défaut peut aussi être initié par l'équipement AF 130. Un exemple correspondant d'échanges de messages est schématiquement illustré sur la **Fig. 4B.**

Dans une étape 451, l'équipement AF 130 initie auprès de l'équipement PCRF 124 une procédure d'établissement de session IP-CAN. L'équipement AF 130 initie cette procédure par envoi d'un message dédié sur la liaison 157. Dans le cadre de la technologie LTE, ce message est un message AAR transmis via l'interface Rx. Ce message est, dans un mode de réalisation particulier détaillé ci-après en relation avec la Fig. 6, intercepté par l'équipement mandataire PXY 300. L'équipement mandataire PXY 300 analyse les informations représentatives des paramètres de qualité de service QoS souhaités pour ladite porteuse radio par défaut qui sont contenues dans ledit message intercepté, et les compare avec les capacités effectives de la liaison sans-fil 303, en tenant compte des porteuses radio déjà établies via ladite liaison sans-fil 303. L'équipement mandataire PXY 300 décide alors en conséquence si ladite porteuse radio par défaut peut être établie, ou pas, au vu des capacités effectives de la liaison sans-fil 303 et dans quelles conditions.

Si l'équipement mandataire PXY 300 décide que ladite porteuse radio par défaut ne peut pas être établie au vu des capacités effectives de la liaison sans-fil 303, l'équipement mandataire PXY 300 rejette la procédure d'établissement de session IP-CAN en répondant à l'équipement AF 130 à la place de l'équipement PCRF 124. En d'autres termes, l'équipement mandataire PXY 300 rejette la procédure d'établissement de session IP-CAN en envoyant une réponse négative à l'équipement AF 130. Dans le cadre de la technologie LTE, ce message est un message AAA représentatif d'une réponse négative et est transmis via l'interface Rx.

Si l'équipement mandataire PXY 300 décide que ladite porteuse radio par défaut peut être établie au vu des capacités effectives de la liaison sans-fil 303, l'équipement mandataire PXY 300 renvoie le message intercepté, à l'équipement PCRF 124 via la liaison 157, dans une étape 452.

Sur réception de ce message, dans une étape 453, l'équipement PCRF 124 crée en conséquence une session IP-CAN, après une vérification d'adéquation entre des informations de caractéristiques de session fournies par l'équipement AF 130 dans ledit message et les politiques provisionnées pour l'utilisateur (et donc l'équipement utilisateur UE) concerné.

Dans une étape 454, l'équipement PCRF 124 envoie à l'équipement AF 130 un message d'acquittement sur la liaison 157. Dans le cadre de la technologie LTE, l'équipement PCRF 124 envoie un message AAA via l'interface Rx. L'équipement PCRF 124 confirme ainsi la prise en compte de la demande d'établissement de session IP-CAN formulée par l'équipement AF 130. Ce message est, dans le mode de réalisation particulier détaillé ci-après en relation avec la Fig. 6, intercepté par l'équipement mandataire PXY 300. L'équipement mandataire PXY 300 détecte que le message intercepté est un message d'acquittement, qui fait donc suite à un message de requête qui a été précédemment intercepté et qui a déjà été traité par l'équipement mandataire PXY 300. L'équipement mandataire PXY 300 peut alors savoir si l'établissement de la porteuse radio par défaut en question a été ou pas accepté par l'équipement PCRF 124. Dans une étape 455, l'équipement mandataire PXY 300 renvoie le message intercepté à l'équipement AF 130 via la liaison 157.

Dans une étape 456, l'équipement PCRF 124 initie une procédure d'établissement de session IP-CAN, concernant la porteuse radio par défaut à établir, auprès de la passerelle PGW 125. Cette procédure est initiée par l'envoi d'un message dédié sur la liaison 158. Dans le cadre de la technologie LTE, l'équipement PCRF 124 envoie un message RAR via l'interface Gx. Ce message est, tel que détaillé ci-après en relation avec la Fig. 5, intercepté par l'équipement mandataire PXY 300.

Dans une étape 457 (telle que détaillée ci-après en relation avec la Fig. 5), l'équipement mandataire PXY 300 analyse les informations représentatives des paramètres de qualité de service QoS souhaités pour ladite porteuse radio par défaut qui sont contenues dans ledit message intercepté, et les compare avec les capacités effectives de la liaison sans-fil 303, en tenant compte des porteuses radio déjà établies via ladite liaison sans-fil 303. L'équipement mandataire PXY 300 décide alors en conséquence si ladite porteuse radio par défaut peut être établie, ou pas, au vu des capacités effectives de la liaison sans-fil 303 et dans quelles conditions ladite porteuse radio par défaut peut être établie.

Si l'équipement mandataire PXY 300 décide que ladite porteuse radio par défaut ne peut pas être établie au vu des capacités effectives de la liaison sans-fil 303, l'équipement mandataire PXY 300 rejette la procédure d'établissement de session IP-CAN en répondant à l'équipement PCRF 124 à la place de la passerelle PGW. Dans le cadre de la technologie LTE, l'équipement mandataire PXY 300 rejette la procédure d'établissement de session IP-CAN en envoyant à l'équipement PCRF 124 via l'interface Gx un message RAA représentatif d'une réponse négative.

Si l'équipement mandataire PXY 300 décide que ladite porteuse radio par défaut peut être établie au vu des capacités effectives de la liaison sans-fil 303, l'équipement mandataire PXY 300 modifie éventuellement les informations représentatives des paramètres de qualité de service QoS souhaités pour ladite porteuse radio par défaut qui sont contenues dans ledit message intercepté, afin de les ajuster aux capacités effectives de la liaison sans-fil 303. Ensuite, dans une étape 458, l'équipement mandataire PXY 300 renvoie le message, éventuellement modifié pour prendre en compte les capacités effectives de la liaison sans-fil 303, à destination de la passerelle PGW 125 via la liaison 158.

Dans une étape 459, la passerelle PGW 125 met en place les ressources nécessaires à l'établissement de session IP-CAN pour l'équipement utilisateur UE en question. En d'autres termes, la passerelle PGW 125 implémente des opérations d'application de politique de qualité de service (« QoS Policy Enforcement » en anglais) par le biais de sa composante PCEF, en adéquation avec les besoins de la porteuse radio par défaut concernée.

Dans une étape 460, la passerelle PGW 125 envoie à l'équipement PCRF 124 via la liaison 158 un message d'acquittement pour confirmer l'établissement de la session IP-CAN. Dans le cadre de la technologie LTE, la passerelle PGW 125 envoie un message RAA via l'interface Gx. Bien que destiné à l'équipement PCRF 124, ce message d'acquittement est intercepté par l'équipement mandataire PXY 300. L'équipement mandataire PXY 300 détecte que le message intercepté est un message d'acquittement, qui fait donc suite à un message de requête qui a été précédemment intercepté et qui a déjà été traité par l'équipement mandataire PXY 300. L'équipement mandataire PXY 300 peut alors savoir si l'établissement de la porteuse radio par défaut en question a été accepté par la passerelle PGW 125 ou pas. Ensuite, dans une étape 461, l'équipement mandataire PXY 300 renvoie le message à destination de l'équipement PCRF 124 via la liaison 158.

Dans une étape 462, la passerelle PGW 125 instruit la mise en place de la session, et donc de la porteuse par défaut en question, par suite de messages depuis la passerelle PGW 125 jusqu'à l'équipement utilisateur UE 100, en passant par la passerelle SGW 123, l'entité MME 122 et la station de base eNB 111. Cet ensemble d'opérations est schématisé par une unique flèche (462) sur la Fig. 4B par souci de simplification.

Ensuite, dans une étape 463, de la signalisation se met en place entre la passerelle PGW 125 et l'équipement utilisateur UE 100.

A noter qu'un établissement d'une ou plusieurs porteuses radio dédiées peut aussi être initié dans le cadre de la création de session telle que décrite ci-dessus, soit par l'équipement AF 130, soit par l'équipement utilisateur UE 100.

La **Fig. 5** illustre schématiquement un algorithme, implémenté par l'équipement mandataire PXY 300, pour traiter des messages interceptés sur la liaison 158 par l'équipement mandataire PXY 300.

Dans une étape S501, l'équipement mandataire PXY 300 reçoit un message. Ce message est intercepté sur la liaison 158 par l'équipement mandataire PXY 300. Dans le cadre de la technologie LTE, le message reçu à l'étape S501 a été intercepté par l'équipement mandataire PXY 300 sur l'interface Gx.

Dans une étape S502, l'équipement mandataire PXY 300 identifie quel est l'émetteur originel du message reçu à l'étape S501. L'adresse IP de l'émetteur originel du message reçu à l'étape S501 est l'adresse IP source dudit message. Par configuration à l'installation, l'équipement mandataire PXY 300 a connaissance de l'adresse IP de l'équipement PCRF 124 et de l'adresse IP de la passerelle PGW 125, et est donc en mesure de déterminer quel est l'émetteur originel.

Dans une étape S503, l'équipement mandataire PXY 300 vérifie que le message reçu à l'étape S501 a été initialement envoyé par la passerelle PGW 125. Si tel est le cas, une étape S504 est effectuée ; sinon, une étape S507 est effectuée.

Dans l'étape S504, l'équipement mandataire PXY 300 détermine de quel type est le message reçu à l'étape S501 en provenance de la passerelle PGW 125. En effet, la passerelle PGW 125 communique avec l'équipement PCRF 124 via la liaison 158 dans des contextes divers. Pour prendre en compte les capacités effectives de liaisons sans-fil utilisées pour déployer des stations de base eNBs respectives, l'équipement mandataire PXY 300 s'intéresse plus particulièrement aux messages de requête d'établissement de session (« Session Establishment Request » en anglais), pour ce qui concerne l'établissement de porteuses radio par défaut, et aux messages de requête de mise à jour de session (« Session Update Request » en anglais), pour ce qui concerne l'établissement de porteuses radio dédiées et pour ce qui concerne la mise à jour de porteuses radio déjà établies. L'équipement mandataire PXY 300 peut aussi s'intéresser à des messages d'acquittement (ou de réponse) correspondant à ces requêtes, pour savoir si la passerelle PGW 125 a accepté ou pas lesdites requêtes, comme déjà évoqué en relation avec la Fig. 4A. Cet aspect n'est pas détaillé plus avant dans le cadre de la Fig. 5.

Dans le cadre de la technologie LTE, l'équipement mandataire PXY 300 s'intéresse ici plus particulièrement aux messages CCR qui sont envoyés par la passerelle PGW 125 à l'équipement PCRF 124.

Dans une étape S505, l'équipement mandataire PXY 300 vérifie que le message reçu à l'étape S501 est un message de requête d'établissement de session ou un message de requête de mise à jour de session. Dans le cadre de la technologie LTE, l'équipement mandataire PXY 300 vérifie que le message reçu à l'étape S501 est un message CCR concernant une requête d'établissement de session ou une requête de mise à jour de session. Si tel est le cas, une étape S509 est effectuée ; sinon, une étape S506 est effectuée, dans laquelle l'équipement mandataire PXY 300 renvoie ledit message à destination de l'équipement PCRF 124 via la liaison 158 (ce qui met fin à l'algorithme de la Fig. 5). A noter que dans le cas d'un message de requête d'établissement de session en provenance de la passerelle PGW 125 qui est alors représentatif d'un attachement de l'équipement utilisateur UE concerné, l'équipement mandataire PXY 300 est capable de déterminer, dans le contenu du message reçu à l'étape S501, dans quelle cellule est localisé l'équipement utilisateur UE concerné. L'équipement mandataire PXY 300 peut en garder trace, ou en informer le dispositif d'orchestration susmentionné en relation avec la Fig. 3. A noter aussi que dans le cas d'un message de requête de mise à jour de session en provenance de la passerelle PGW 125, l'équipement mandataire PXY 300 est aussi capable de déterminer, dans le contenu du message reçu à l'étape S501, dans quelle cellule est localisé l'équipement utilisateur UE concerné. L'équipement mandataire PXY 300 peut en garder trace, ou en informer le dispositif d'orchestration susmentionné en relation avec la Fig. 3.

Dans l'étape S507, l'équipement mandataire PXY 300 détermine de quel type est le message reçu à l'étape S501 en provenance de l'équipement PCRF 124. En effet, l'équipement PCRF 124 communique avec la passerelle PGW 125 via la liaison 158 dans des contextes divers. Pour prendre en compte les capacités effectives de liaisons sans-fil utilisées pour déployer des stations de base eNBs respectives, l'équipement mandataire PXY 300 s'intéresse plus particulièrement aux messages de requête d'établissement de session (« Session Establishment Request » en anglais), pour ce qui concerne l'établissement de porteuses radio par défaut et pour ce qui concerne l'établissement de porteuses radio dédiées, et aux messages de requête de mise à jour de session (« Session Update Request » en anglais) pour ce qui concerne la mise à jour de porteuses radio déjà établie. L'équipement mandataire PXY 300 peut aussi s'intéresser à des messages d'acquittement (ou de réponse) correspondant à ces requêtes, pour savoir si l'équipement PCRF 124 a accepté ou pas lesdites requêtes, comme déjà évoqué en relation avec la Fig. 4A. Cet aspect n'est pas détaillé plus avant dans le cadre de la Fig. 5.

Dans le cadre de la technologie LTE, l'équipement mandataire PXY 300 s'intéresse ici plus particulièrement aux messages CCA qui sont envoyés par la passerelle PGW 125 à l'équipement PCRF 124 dans le cadre du mode « piggy-back » et aux messages RAR qui sont envoyés par la passerelle PGW 125 à l'équipement PCRF 124 lorsque l'établissement ou la modification de session résulte d'une demande de l'équipement AF 130.

Dans une étape S508, l'équipement mandataire PXY 300 vérifie que le message reçu à l'étape S501 est un message de requête d'établissement de session ou un message de requête de mise à jour de session. Dans le cadre de la technologie LTE, l'équipement mandataire PXY 300 vérifie que le message reçu à l'étape S501 est un message CCA ou un message RAR (tels qu'évoqués ci-dessus), concernant une requête d'établissement de session ou une

14

requête de mise à jour de session. Si tel est le cas, l'étape S509 est effectuée ; sinon, l'étape S506 est effectuée, dans laquelle l'équipement mandataire PXY 300 renvoie ledit message à destination de la passerelle PGW 125 via la liaison 158 (ce qui met fin à l'algorithme de la Fig. 5).

Dans l'étape S509, l'équipement mandataire PXY 300 détermine dans quelle cellule du système de télécommunication cellulaire EPS est localisé l'équipement utilisateur UE concerné par le message reçu à l'étape S501. Considérons que l'équipement utilisateur UE en question est l'équipement utilisateur UE 100. Le message reçu par l'équipement mandataire PXY 300 à l'étape S501 indique dans quelle cellule du système de télécommunication cellulaire EPS est localisé l'équipement utilisateur UE 100 concerné par le message reçu à l'étape S501, *i.e.* identifie la station de base eNB 111 via laquelle l'équipement utilisateur UE 100 accède aux services du système de télécommunication cellulaire EPS.

Dans une étape S510, l'équipement mandataire PXY 300 vérifie si la cellule du système de télécommunication cellulaire EPS où est localisé l'équipement utilisateur UE 100 concerné par le message reçu à l'étape S501 est déportée grâce à une liaison sans-fil. C'est le cas de la station de base eNB 111, qui est déportée grâce à la liaison sans-fil 303. L'équipement mandataire PXY 300 a une connaissance préétablie des cellules qui sont déportées grâce à de telles liaisons sans-fil. Cette connaissance peut être fournie par le dispositif d'orchestration susmentionné en relation avec la Fig. 3. Si ladite cellule est déportée par une liaison sans-fil, une étape S511 est effectuée ; sinon, une étape S517 est effectuée, dans laquelle l'équipement mandataire PXY 300 renvoie ledit message via la liaison 158 à destination de l'équipement PCRF 124 (ce qui met fin à l'algorithme de la Fig. 5).

Dans l'étape S511, l'équipement mandataire PXY 300 détermine un besoin en bande passante exprimé par des informations de qualité de service QoS incluses dans le message reçu à l'étape S501.

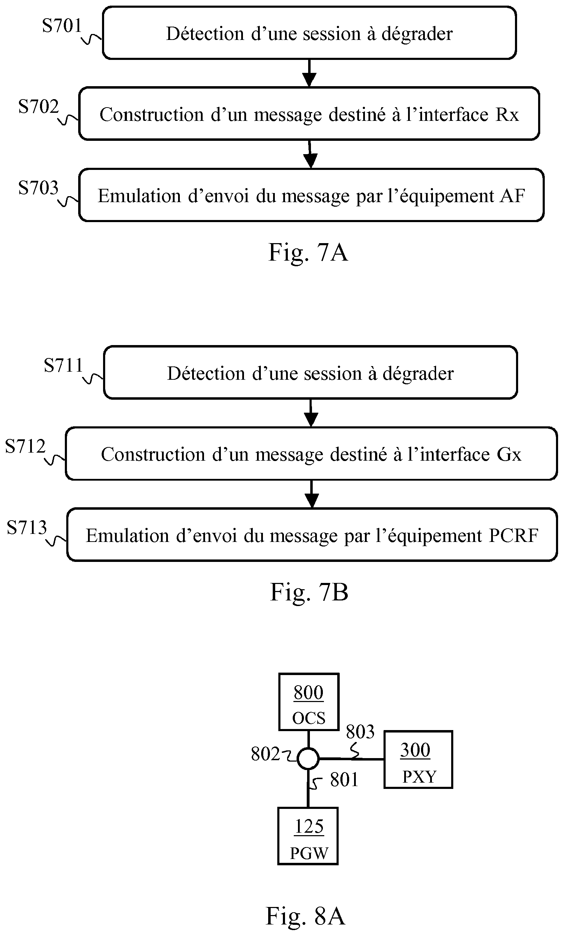

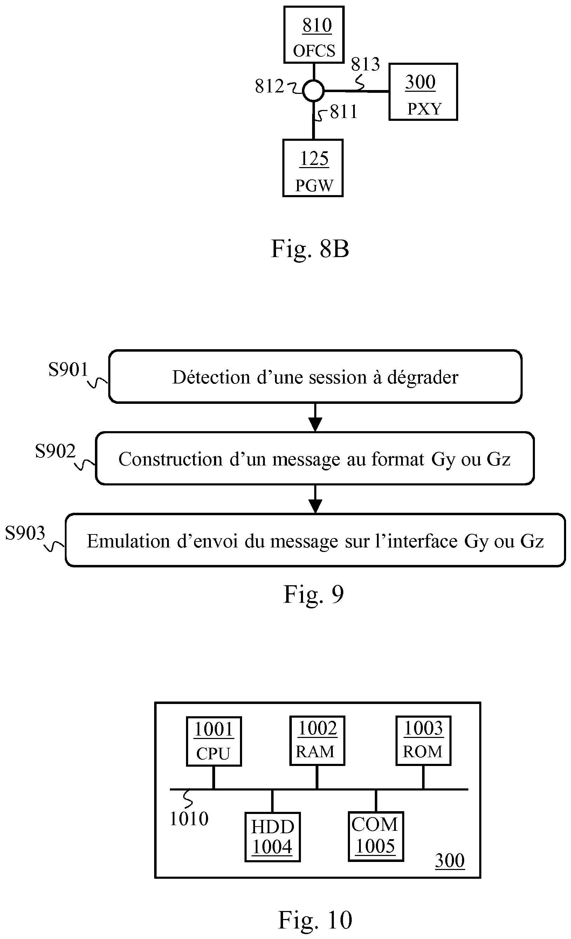

Dans le cadre de la technologie LTE, le message reçu à l'étape S501 contient notamment un identifiant QCI (« QoS Class Identifier » en anglais) de classe de qualité de service QoS représentant un niveau de performance de qualité de service QoS souhaité pour chaque porteuse radio concernée. Ce niveau de performance correspond à des caractéristiques de transmission standardisées, incluant une information indiquant un type de ressource (c'est-à-dire indiquant si la bande passante doit être garantie ou pas), un niveau de priorité, une information de latence (appelée « Packet Delay Budget » en anglais) acceptable, une information de taux d'erreur/perte paquet (« Packet Error Loss Rate » en anglais) acceptable. Un tel niveau de priorité est plus particulièrement utilisé dans le cadre des algorithmes des Figs. 7A, 7B et 9. Dans le cadre de la technologie LTE, ce niveau de priorité est appelé ARP (« Allocation and Rétention Priority » en anglais) et est une valeur entière comprise entre « 1 » et « 15 », où la valeur « 1 » représente le niveau de priorité le plus élevé et la valeur « 15 » représente le niveau de priorité le plus faible.

Le message reçu à l'étape S501 contient notamment aussi une information de débit binaire maximum en voie ascendante, nommée ici MBR-UL (« Maximum Bit Rate / UpLink » en anglais), ainsi qu'une information de débit binaire maximum en voie descendante, nommée ici MBR-DL (« Maximum Bit Rate / DownLink » en anglais), pour la porteuse radio en question.

Lorsque la porteuse radio en question est une porteuse radio dédiée, le message reçu à l'étape S501 contient notamment une information indiquant si ledit message concerne une modification des caractéristiques d'une porteuse radio dédiée existante ou un établissement d'une nouvelle porteuse radio dédiée. Cette information est plus particulièrement utilisée dans une étape S512 décrite ci-après.

Lorsque la porteuse radio en question est une porteuse radio dédiée à débit binaire garanti GBR, le message reçu à l'étape S501 contient notamment aussi une information de débit binaire garanti GBR en voie ascendante, nommée ici GBR-UL (« Guaranteed Bit Rate / UpLink » en anglais), et une information de débit binaire garanti GBR en voie descendante, nommée ici GBR-DL (« Guaranteed Bit Rate / DownLink » en anglais), pour la porteuse radio dédiée en question. Cette information est plus particulièrement utilisée dans une étape S513 décrite ci-après.

L'équipement mandataire PXY 300 déduit donc des informations de qualité de service QoS incluses dans le message reçu à l'étape S501 quel est le besoin en bande passante pour chaque porteuse radio concernée, nommée ici EBW (« Expected BandWidth » en anglais).

Lorsque l'équipement mandataire PXY 300 parvient à obtenir via la liaison 307 des informations de capacités effectives de la liaison sans-fil 303 distinctes en voie montante et en voie descendante, le besoin en bande passante EBW est exprimé de manière séparée entre la voie montante (EBW-UL) et la voie descendante (EBW-DL), de la façon suivante :

$$EBW = \{EBW\text{-}UL \; ; \; EBW\text{-}DL\}$$

avec

$$\text{EBW-UL} = \text{MBR-UL et EBW-DL} = \text{MBR-DL}$$

Lorsque l'équipement mandataire PXY 300 obtient via la liaison 307 des informations de capacités effectives de la liaison sans-fil 303 combinées en voie montante et en voie descendante, le besoin en bande passante EBW est exprimé conjointement pour la voie montante et la voie descendante, de la façon suivante :

$$\text{EBW} = \text{MBR-UL} + \text{MBR-DL}$$

Dans l'étape S512, l'équipement mandataire PXY 300 détermine une bande passante restante RBW (« Remaining BandWidth » en anglais) sur la liaison sans-fil utilisée pour déporter la station de base eNB concernée, *i.e.* la station de base eNB 111 pour l'équipement utilisateur UE 100. La bande passante restante RBW est déterminée comme suit :

$$\text{RBW} = \text{WLBW} - \text{UBW}$$

où WLBW (« Wireless Link BandWidth » en anglais) représente la bande passante de la liaison sans-fil utilisée pour déporter la station de base eNB concernée et UBW (« Used BandWidth » en anglais) représente la bande passante utilisée sur ladite liaison sans-fil par les porteuses radio qui ont été établies et qui n'ont pas été fermées. L'équipement mandataire PXY 300 obtient une information représentative de la bande passante WLBW de la liaison sans-fil 303 en émettant une requête correspondante via la liaison 307 et en recevant une réponse incluant ladite information via ladite liaison 307. L'équipement mandataire PXY 300 obtient une information représentative de la bande passante utilisée UBW soit en gardant trace des établissements de porteuse radio et des fermetures de porteuses radio grâce aux messages interceptés sur les liaisons 157 et 158, soit en interrogeant le dispositif d'orchestration susmentionné en relation avec la Fig. 3.

Lorsque l'équipement mandataire PXY 300 parvient à obtenir via la liaison 307 des informations de capacités effectives de la liaison sans-fil 303 distinctes en voie montante et en voie descendante, la bande passante restante RBW est exprimée de manière séparée entre la voie montante (RBW-UL) et la voie descendante (RBW-DL), la bande passante WLBW est aussi exprimée de manière séparée entre la voie montante (WLBW-UL) et la voie descendante (WLBW-DL), et la bande passante utilisée UBW est aussi exprimée de manière séparée entre la voie montante (UBW-UL) et la voie descendante (UBW-DL), de la façon suivante :

$$\text{RBW} = \{\text{RBW-UL} \ ; \ \text{RBW-DL}\}$$

$$\text{WLBW} = \{\text{WLBW-UL} \ ; \ \text{WLBW-DL}\}$$

$$\text{UBW} = \{\text{UBW-UL} \ ; \ \text{UBW-DL}\}$$

avec
RBW-UL = WLBW-UL - UBW-UL et RBW-DL = WLBW-DL - UBW-DL

Donc, lorsque l'équipement mandataire PXY 300 obtient via la liaison 307 des informations de capacités effectives de la liaison sans-fil 303 combinées en voie montante et en voie descendante, la bande passante restante RBW est exprimée de la façon suivante :

$$\text{RBW} = \text{RBW-UL} + \text{RBW-DL}$$

Lorsque le message reçu à l'étape S501 contient notamment une information indiquant si ledit message concerne une modification des caractéristiques d'une porteuse radio dédiée existante, la bande passante utilisée UWB est diminuée, pour le calcul de la bande passante restant RBW, des débits binaires maximum MBR-UL et MBR-DL qui avaient été précédemment utilisés pour définir ladite porteuse radio dédiée existante.

Dans un mode de réalisation particulier, la bande passante restante RBW (potentiellement à travers la bande passante WLBW offerte par la liaison sans-fil considérée) est diminuée d'une marge ε prédéfinie. Cette marge ε prédéfinie permet d'absorber des variations de bande passante restante RBW (dues par exemple à des variations de conditions climatiques) sans qu'il n'y ait d'impact sur les porteuses radio établies. De plus, cette marge ε prédéfinie permet d'anticiper des baisses de la bande passante WLBW offerte par la liaison sans-fil considérée (dues par exemple à une dégradation des conditions climatiques) qui nécessiteraient de dégrader voir de fermer des porteuses radio établies. Cet aspect est détaillé ci-après en relation avec les Figs. 7A, 7B et 9.

Dans l'étape S513, l'équipement mandataire PXY 300 vérifie si le besoin en bande passante EBW représenté par le message reçu à l'étape S501 peut être couvert par la bande passante restante déterminée à l'étape S512. Si tel est le cas, ce qui signifie que EBW ≤ RBW (ou que EBW-UL ≤ RBW-UL et EBW-DL ≤ RBW-DL) et que le message reçu à l'étape S501 n'a pas besoin d'être modifié pour prendre en compte les capacités effectives de la liaison sans-fil concernée, alors une étape S515 est effectuée ; sinon, l'équipement mandataire PXY 300 détermine une valeur modifiée MMBR-DL du débit binaire maximum en voie descendante MBR-DL et une valeur modifiée MRMBR-UL du débit binaire maximum MBR-UL en voie ascendante, afin d'adapter la bande passante requise aux capacités effectives de la liaison sans-fil concernée.

Lorsque l'équipement mandataire PXY 300 parvient à obtenir via la liaison 307 des informations de capacités effectives de la liaison sans-fil 303 distinctes en voie montante et en voie descendante, les valeurs modifiées MMBR-DL et MMBR-UL sont définies de la manière suivante :

$$MMBR\text{-}DL = [MBR\text{-}DL * RBW\text{-}DL / EBW\text{-}DL]$$

$$MMBR\text{-}UL = [MBR\text{-}UL * RBW\text{-}UL / EBW\text{-}UL]$$

où [...] représente l'opération partie entière par défaut (« floor » en anglais).

Sinon, les valeurs modifiées MMBR-DL et MMBR-UL sont définies de la manière suivante :

$$MMBR\text{-}DL = [MBR\text{-}DL * RBW / EBW]$$

$$MMBR\text{-}UL = [MBR\text{-}UL * RBW / EBW]$$

Si ladite valeur modifiée MMBR-DL est inférieure strictement au débit binaire garanti en voie descendante GBR-DL (tel qu'indiqué dans le message reçu à l'étape S501) et/ou si ladite valeur modifiée MMBR-UL est inférieure strictement au débit binaire garanti en voie ascendante GBR-UL (tel qu'indiqué dans le message reçu à l'étape S501), alors une étape S514 est effectuée ; sinon, le message reçu à l'étape S501 a besoin d'être modifié pour prendre en compte les capacités effectives de la liaison sans-fil concernée et l'étape S515 est effectuée.

Dans l'étape S514, l'équipement mandataire PXY 300 considère que le besoin en bande passante EBW représenté par le message reçu à l'étape S501 ne peut pas être couvert par la bande passante restante RBW déterminée à l'étape S512. L'équipement mandataire PXY 300 rejette la requête représentée par le message reçu à l'étape S501 et transmet une réponse négative à l'émetteur originel du message reçu à l'étape S501 sans en informer le destinataire initialement ciblé du message reçu à l'étape S501.

Pour transmettre cette réponse négative, l'équipement mandataire PXY 300 émule un envoi sur la liaison 158. Dans le cadre de la technologie LTE, ladite réponse négative est donc transmise sur l'interface Gx : si le message reçu à l'étape S501 est un message CCR qui a été transmis par la passerelle PGW 125, l'équipement mandataire PXY 300 transmet en réponse, à la passerelle PGW 125, un message CCA représentatif d'une réponse négative ; si le message reçu à l'étape S501 est un message CCA qui a été transmis par l'équipement PCRF 124 (mode « piggy-back »), l'équipement mandataire PXY 300 peut transmettre en réponse, à l'équipement PCRF 124, un message (e.g. un message CCR) représentatif d'une réponse négative ; et le message reçu à l'étape S501 est un message RAR qui a été transmis par l'équipement PCRF 124 (suite à une demande de l'équipement AF 130), l'équipement mandataire PXY 300 transmet en réponse, à l'équipement PCRF 124, un message RAA représentatif d'une réponse négative.

Dans un mode de réalisation particulier, avant de conclure devoir répondre négativement à l'émetteur originel du message reçu à l'étape S501, l'équipement mandataire PXY 300 peut chercher à récupérer de la bande passante en dégradant ou en fermant des porteuses radio déjà établies, afin d'augmenter ladite bande passante restante RBW en diminuant ladite bande passante utilisée UBW. Cet aspect est adressé par la suite en relation avec les Figs. 7A, 7B et 9. L'exécution de l'étape S514 met fin à l'algorithme de la Fig. 5.

Dans l'étape S515, l'équipement mandataire PXY 300 vérifie si, suite à l'étape S513, le message reçu à l'étape S501 a besoin d'être modifié pour prendre en compte les capacités effectives de la liaison sans-fil concernée. Si tel est le cas, une étape S516 est effectuée; sinon, l'étape S517 est effectuée, dans laquelle l'équipement mandataire PXY 300 renvoie ledit message via la liaison 158 à destination du destinataire initialement ciblé du message reçu à l'étape S501 (ce qui met fin à l'algorithme de la Fig. 5).

Dans l'étape S516, l'équipement mandataire PXY 300 modifie le message reçu à l'étape S501, pour prendre en compte les capacités effectives de la liaison sans-fil concernée, en remplaçant la valeur du débit binaire maximum en voie descendante MBR-DL par la valeur modifiée MMBR-DL et en remplaçant la valeur du débit binaire maximum en voie ascendante MBR-UL par la valeur modifiée MMBR-UL. Ainsi, l'équipement mandataire PXY 300 modifie le message reçu à l'étape S501 en y indiquant un besoin en bande passante au plus égal à la bande passante restante via la liaison sans-fil concernée.

Ensuite, l'étape S517 est effectuée, dans laquelle l'équipement mandataire PXY 300 renvoie ledit message, après modification pour prendre en compte les capacités effectives de la liaison sans-fil concernée, via la liaison 158 à destination du destinataire initialement ciblé du message reçu à l'étape S501 (ce qui met fin à l'algorithme de la Fig. 5).

La **Fig. 6** illustre schématiquement un algorithme, implémenté par l'équipement mandataire PXY 300, pour traiter des messages interceptés sur la liaison 157 par l'équipement mandataire PXY 300.

Dans une étape S601, l'équipement mandataire PXY 300 reçoit un message. Ce message est intercepté sur la liaison 157 par l'équipement mandataire PXY 300. Dans le cadre de la technologie LTE, le message reçu à l'étape S501 a été intercepté par l'équipement mandataire PXY 300 sur l'interface Rx.

Dans une étape S602, l'équipement mandataire PXY 300 identifie quel est l'émetteur originel du message reçu à l'étape S601. L'adresse IP de l'émetteur originel du message reçu à l'étape S601 est l'adresse IP source dudit message. Par configuration à l'installation, l'équipement mandataire PXY 300 a connaissance de l'adresse IP de l'équipement AF 130 et de l'adresse IP de l'équipement PCRF 124, et est donc en mesure de déterminer quel est l'émetteur originel.

Dans une étape S603, l'équipement mandataire PXY 300 vérifie que le message reçu à l'étape S601 a été initialement envoyé par l'équipement AF 130. Si tel est le cas, une étape S604 est effectuée ; sinon, une étape S614 est effectuée, dans laquelle l'équipement mandataire PXY 300 renvoie ledit message à destination de l'équipement PCRF 124 via la liaison 157 (ce qui met fin à l'algorithme de la Fig. 6).

Dans l'étape S604, l'équipement mandataire PXY 300 détermine de quel type est le message reçu à l'étape S601. En effet, l'équipement AF 130 et l'équipement PCRF 124 communiquent via la liaison 157 pour échanger des informations dans des contextes divers. Pour prendre en compte les capacités effectives de liaisons sans-fil utilisées pour déployer des stations de base eNBs respectives, l'équipement mandataire PXY 300 s'intéresse plus particulièrement aux messages de requête d'établissement de session (« Session Establishment Request » en anglais), pour ce qui concerne l'établissement de porteuses radio par défaut, et aux messages de requête de mise à jour de session (« Session Update Request » en anglais), pour ce qui concerne l'établissement de porteuses radio dédiées et pour ce qui concerne la mise à jour de porteuses radio déjà établies. L'équipement mandataire PXY 300 peut aussi s'intéresser à des messages d'acquittement (ou de réponse) correspondant à ces requêtes, pour savoir si l'équipement PCRF 124 a accepté ou pas lesdites requêtes, comme déjà évoqué en relation avec la Fig. 4B. Cet aspect n'est pas détaillé plus avant dans le cadre de la Fig. 6.

Dans le cadre de la technologie LTE, l'équipement mandataire PXY 300 s'intéresse ici plus particulièrement aux messages AAR qui sont envoyés par l'équipement AF 130 à l'équipement PCRF 124.

Dans une étape S605, l'équipement mandataire PXY 300 vérifie que le message reçu à l'étape S601 est un message de requête d'établissement de session ou un message de requête de mise à jour de session. Si tel est le cas, une étape S606 est effectuée ; sinon, l'étape S614 est effectuée, dans laquelle l'équipement mandataire PXY 300 renvoie ledit message à destination de l'équipement PCRF 124 via la liaison 157 (ce qui met fin à l'algorithme de la Fig. 6).

Dans l'étape S606, l'équipement mandataire PXY 300 détermine dans quelle cellule du système de télécommunication cellulaire EPS est localisé l'équipement utilisateur UE concerné par le message reçu à l'étape S601. Considérons que l'équipement utilisateur UE en question est l'équipement utilisateur UE 100. Le message reçu à l'étape S601 n'indique pas explicitement la cellule dans laquelle l'équipement utilisateur UE en question est localisé, puisque l'équipement AF n'a pas connaissance d'une telle information. Un établissement ou une mise à jour de session initiée par l'équipement AF 130 nécessite toutefois au préalable un attachement de l'équipement utilisateur UE en question. L'équipement mandataire PXY 300 en a gardé trace ou en a informé le dispositif d'orchestration susmentionné en relation avec la Fig. 3.

Dans une étape S607, l'équipement mandataire PXY 300 détermine si la cellule du système de télécommunication cellulaire EPS où est localisé l'équipement utilisateur UE 100 concerné par le message reçu à l'étape S601 est déportée grâce à une liaison sans-fil. C'est le cas de la station de base eNB 111, qui est déportée grâce à la liaison sans-fil 303. Si ladite cellule est déportée par une liaison sans-fil, une étape S608 est effectuée ; sinon, l'étape S614 est effectuée, dans laquelle l'équipement mandataire PXY 300 renvoie ledit message à destination de l'équipement PCRF 124 via la liaison 157 (ce qui met fin à l'algorithme de la Fig. 6).

Dans l'étape S608, l'équipement mandataire PXY 300 détermine un besoin en bande passante exprimé par des informations de qualité de service QoS incluses dans le message reçu à l'étape S601.

Le message reçu à l'étape S601 contient notamment un identifiant QCI de classe de qualité de service QoS représentant un niveau de performance de qualité de service QoS souhaité pour la porteuse radio concernée, comme déjà décrit en relation avec la Fig. 5.

Le message reçu à l'étape S601 contient notamment aussi une information de débit binaire maximum en voie ascendante MBR-UL, ainsi qu'une information de débit binaire maximum en voie descendante MBR-DL, pour la porteuse radio en question.

L'équipement mandataire PXY 300 déduit donc des informations de qualité de service QoS incluses dans le message reçu à l'étape S601 quel est le besoin en bande passante EBW, déterminé comme dans le cadre de la Fig. 5.

Le message reçu à l'étape S601 contient notamment aussi une information de bande passante minimum requise en voie ascendante, nommée ici LRB-UL (« Low Requested Bandwidth / UpLink » en anglais), ainsi qu'une information de bande passante minimum requise en voie descendante, nommée ici LRB-DL (« Low Requested Bandwidth / DownLink » en anglais), pour la porteuse radio en question. A noter que ces informations ne sont pas présentes dans les messages traités dans le cadre de l'algorithme de la Fig. 5, car, contrairement à l'équipement AF 130, l'équipement PCRF 124 a connaissance des règles de souscription de l'utilisateur de l'équipement utilisateur UE concerné par la porteuse radio en question.

Ainsi, dans l'étape S608, l'équipement mandataire PXY 300 détermine un besoin en bande passante exprimé sous la forme d'une bande passante minimale MBW (« Minimum BandWidth » en anglais) requise.

Lorsque l'équipement mandataire PXY 300 parvient à obtenir via la liaison 307 des informations de capacités effectives de la liaison sans-fil 303 distinctes en voie montante et en voie descendante, la bande passante minimale MBW est déterminée comme suit :

$$MBW = \{MBW\text{-}UL \; ; \; MBW\text{-}DL\}$$

avec MBW-UL = LRB-UL et MBW-DL = LRB-DL

Lorsque l'équipement mandataire PXY 300 obtient via la liaison 307 des informations de capacités effectives de la liaison sans-fil 303 combinées en voie montante et en voie descendante, la bande passante minimale MBW est déterminée comme suit :

$$MBW = LRB\text{-}UL + LRB\text{-}DL$$

Dans l'étape S609, l'équipement mandataire PXY 300 détermine une bande passante restante RBW sur la liaison sans-fil utilisé pour déporter la station de base eNB concernée, *i.e.* la station de base eNB 111 pour l'équipement utilisateur UE 100. Cette bande passante restante RBW est déterminée comme dans le cadre de la Fig. 5.

Dans l'étape S610, l'équipement mandataire PXY 300 vérifie si le besoin en bande passante représenté par le message reçu à l'étape S601 peut être couvert par la bande passante restante déterminée à l'étape S609. Si tel est le cas, ce qui signifie que MBW ≤ RBW et que le message reçu à l'étape S601 n'a pas besoin d'être modifié, alors une étape S612 est effectuée ; sinon, l'équipement mandataire PXY 300 détermine une valeur modifiée MMBR-DL du débit binaire maximum en voie descendante MBR-DL et une valeur modifiée MMBR-UL du débit binaire maximum MBR-UL en voie ascendante, comme dans le cadre de la Fig. 5.

Si la bande passante restante RBW est supérieure ou égale à la bande passante minimale MBW, alors l'étape S614 est effectuée, dans laquelle l'équipement mandataire PXY 300 renvoie ledit message à destination de l'équipement PCRF 124 via la liaison 157 (ce qui met fin à l'algorithme de la Fig. 6) ; sinon, l'étape S611 est effectuée.

Dans l'étape S611, l'équipement mandataire PXY 300 considère que le besoin en bande passante représenté par le message reçu à l'étape S601 ne peut pas être couvert par la bande passante restante déterminée à l'étape S609. L'équipement mandataire PXY 300 rejette la requête émanant de l'équipement AF 130 et transmet une réponse négative à l'équipement AF 130 sans en informer l'équipement PCRF 124, ce qui signifie que le message reçu à l'étape S601 n'est pas propagé jusqu'à l'équipement PCRF 124. Pour transmettre cette réponse négative, l'équipement mandataire PXY 300 émule un envoi de ladite réponse négative par l'équipement PCRF 124, l'équipement AF 130 pensant donc recevoir ladite réponse négative de la part de l'équipement PCRF 124. Dans le cadre de la technologie LTE, ladite réponse négative est un message AAA envoyé via l'interface Rx. Dans un mode de réalisation particulier, avant de décider devoir répondre négativement à l'équipement AF 130, l'équipement mandataire PXY 300 peut chercher à récupérer de la bande passante en dégradant des porteuses radio déjà établies, afin d'augmenter ladite bande passante restante RBW en diminuant ladite bande passante utilisée UBW. Cet aspect est adressé par la suite en relation avec les Figs. 7A, 7B et 9. L'exécution de l'étape S611 met fin à l'algorithme de la Fig. 6.

L'algorithme de la Fig. 6 permet ainsi d'éviter que l'équipement PCRF 124 ait à traiter une demande émanant de l'équipement AF 130 qui ne pourrait pas être satisfaite au vu des capacités effectives d'une liaison sans-fil utilisée pour déporter une station de base eNB impliquée par ladite demande.

Ensuite si le message de requête d'établissement de session ou le message de requête de mise à jour de session est accepté par l'équipement mandataire PXY 300, l'équipement PCRF 124 peut accepter ou refuser l'établissement de session ou la mise à jour de session, en fonction des politiques de qualité de service QoS provisionnées pour l'utilisateur concerné (et donc l'équipement utilisateur UE concerné). Si l'équipement PCRF 124 accepte, la qualité de service QoS autorisée pour cet utilisateur peut être supérieure à celle demandée par l'équipement AF 130, c'est-à-dire que la bande passante garantie accordée par l'équipement PCRF 124 peut être supérieure à ce qui est demandé par l'équipement AF 130. Dans ce cas, l'équipement mandataire PXY 300 peut avoir à modifier les informations de qualité de service QoS dans des messages subséquents échangés entre l'équipement PCRF 124 et la passerelle PGW 125 via la liaison 158, afin de prendre en compte les capacités effectives d'une liaison sans-fil impliquée. Cet aspect a déjà été détaillé en relation avec la Fig. 5.

Les Figs. 7A et 7B, de même que la Fig. 9, illustrent schématiquement des algorithmes, implémentés par l'équipement mandataire PXY 300, pour libérer de la bande passante au sein du système de télécommunication cellulaire EPS. Comme indiqué précédemment en relation avec les Figs. 5 et 6, cela permet de pouvoir accepter de nouvelles porteuses radio ou d'augmenter la bande passante garantie pour des porteuses radio déjà établies, alors que, en l'état, la liaison sans-fil 303 ne dispose pas de suffisamment de bande passante restante RBW pour ce faire.

La **Fig. 7A** illustre schématiquement un premier mode de réalisation.

Dans une étape S701, l'équipement mandataire PXY 300 détecte qu'une session est à dégrader, c'est-à-dire que la bande passante garantie associée à une ou plusieurs porteuses radio de ladite session doit être diminuée, ou que cette session est à fermer. Par exemple, ladite session est associée à un niveau de priorité plus faible que la porteuse radio que le système de télécommunication cellulaire EPS cherche à établir ou modifier (dans le cadre de l'algorithme de la Fig. 5 ou de la Fig. 6). Un ou plusieurs critères autres que le niveau de priorité peuvent être utilisés pour trouver une ou plusieurs porteuses radio à dégrader ou à fermer, et il se peut que la question du niveau de priorité soit secondaire.

Ladite session doit être dégradée ou fermée de sorte à permettre, éventuellement en complément d'une dégradation ou d'une fermeture d'une ou plusieurs autres sessions, que la bande passante restante RBW sur la liaison sans-fil 303 permette d'accepter l'établissement de la nouvelle porteuse radio en question ou la modification de la porteuse radio déjà établie en question. Une telle dégradation de session peut consister à fermer une ou plusieurs porteuses radio de ladite session.

Dans une étape S702, l'équipement mandataire PXY 300 construit en conséquence un message de requête de mise à jour de session (« Session Update Request » en anglais) vis-à-vis de la session à dégrader ou un message de fermeture de ladite session. Le message de requête de mise à jour de session inclut des informations de qualité de service QoS correspondant résultant de la dégradation à appliquer. Notamment, le message de requête de mise à jour de session inclut des informations de débits binaires maximum MBR-UL et MBR-DL correspondant à la bande passante allouée précédemment à la porteuse radio concernée minorée de la dégradation de bande passante souhaitée.

Dans une étape S703, l'équipement mandataire PXY 300 émule un envoi, par l'équipement AF 130, du message de requête de mise à jour de session construit à l'étape S702, l'équipement PCRF 124 pensant donc recevoir le message de requête de mise à jour de session de la part de l'équipement AF 130. Dans le cadre de la technologie LTE, ledit message est donc un message AAR transmis via l'interface Rx dans le cadre d'une dégradation de session et ledit message est un message STR (« Session Termination Request » en anglais) transmis via l'interface Rx dans le cadre d'une fermeture de session. A noter que les messages STR sont définis par le protocole DIAMETER, plus particulièrement dans le document normatif RFC 4005.

La **Fig. 7B** illustre schématiquement un second mode de réalisation.

Dans une étape S711, l'équipement mandataire PXY 300 détecte qu'une session est à dégrader, c'est-à-dire que la bande passante garantie associée à une ou plusieurs porteuses radio de ladite session doit être diminuée, ou que cette session est à fermer. L'étape S711 est identique à l'étape S701.

Dans une étape S712, l'équipement mandataire PXY 300 construit en conséquence un message de requête de mise à jour de session vis-à-vis de la session à dégrader ou un message de fermeture de ladite session. Le message de requête de mise à jour de session inclut des informations de qualité de service QoS correspondant résultant de la dégradation à appliquer. Notamment, le message de requête de mise à jour de session inclut des informations de débits binaires maximum MBR-UL et MBR-DL correspondant à la bande passante allouée précédemment à la porteuse radio concernée minorée de la dégradation de bande passante souhaitée.

Dans une étape S713, l'équipement mandataire PXY 300 émule un envoi, par l'équipement PCRF 124, du message de requête de mise à jour de session construit à l'étape S712 ou du message de fermeture de session, la passerelle PGW 125 pensant donc recevoir le message de requête de mise à jour de session ou de fermeture de session de la part de la passerelle PGW 125. Dans le cadre de la technologie LTE, ledit message est donc un message RAR transmis via l'interface Gx.

Dans un mode de réalisation particulier, l'équipement mandataire PXY 300 intercepte tout message d'acquittement transmis par la passerelle PGW 125 en réponse au message transmis à l'étape S713. Dans le cadre de la technologie LTE, ledit message est un message RAA transmis par la passerelle PGW 125 via l'interface Gx.

La **Fig. 8A** illustre schématiquement un complément du système de télécommunication cellulaire EPS tel que représenté sur la Fig. 3.

Sur le schéma de la Fig. 8A, la passerelle PGW 125 est connectée à un système de taxation en ligne OCS 800 via une liaison 801.

Comme déjà indiqué, dans le cadre de la technologie LTE, les interfaces (et donc les formats de messages applicables) - aussi appelés « reference points » selon la terminologie anglo-saxonne de la technologie LTE - entre les différents éléments constituant le système de télécommunication cellulaire EPS sont standardisées. Notamment, l'interface entre la passerelle PGW 125 et le système de taxation en ligne OCS 800 est dénommée Gy et est définie dans les spécifications 3GPP TS 32.240 « *Telecommunication management; Charging management; Charging architecture and principles* » et 3GPP TS 32.299 « *Telecommunication management; Charging management; Diameter charging applications* ».

La liaison 801 est une liaison logique. Cela signifie que des équipements réseau sont typiquement présents sur cette liaison 801 pour assurer les transmissions de paquets IP dans lesquels sont encapsulés tous les messages échangés. Ainsi, comme montré sur la Fig. 8A, l'équipement mandataire PXY 300 est connecté, via une liaison 803, à un troisième équipement réseau (*e.g.* routeur ou commutateur) 802 présent sur la liaison 801.

Dans un mode de réalisation particulier, l'équipement mandataire PXY 300 intercepte des messages qui transitent sur la liaison 801. Le système de télécommunication cellulaire EPS est tel que la passerelle PGW 125 a connaissance de l'adresse IP du système de taxation en ligne OCS 800, et vice versa. Pour que l'équipement mandataire PXY 300 soit en position d'émuler des envois de messages par le système de taxation en ligne OCS 800 (tel que décrit ci-après en relation avec la Fig. 9), le système de télécommunication cellulaire EPS est tel que l'adresse IP de la passerelle PGW 125 est remplacée par l'adresse IP de l'équipement mandataire PXY 300 auprès du système de taxation en ligne OCS 800, et l'adresse IP du système de taxation en ligne OCS 800 est remplacée par l'adresse IP de l'équipement mandataire PXY 300 auprès de la passerelle PGW 125. Le système de taxation en ligne OCS 800 croit ainsi échanger des messages avec la passerelle PGW 125, alors que, dans les faits, le système de taxation en ligne OCS 800 échange ces messages avec l'équipement mandataire PXY 300. Et surtout, la passerelle PGW 125 croit ainsi échanger des messages avec le système de taxation en ligne OCS 800, alors que, dans les faits, la passerelle PGW 125 échange ces messages avec l'équipement mandataire PXY 300.

A noter donc que la présence du troisième équipement réseau 802 sur la liaison 801 n'est pas strictement nécessaire.

Dans une variante de réalisation, le troisième équipement réseau 802 est configuré pour dérouter vers l'équipement mandataire PXY 300 les messages transitant sur la liaison 801. Par exemple, le troisième équipement réseau 802 dispose d'une liaison dédiée avec l'équipement mandataire PXY 300, par exemple sous la forme d'un tunnel. Le troisième équipement réseau 802 encapsule et transmet alors via ce tunnel respectif tout message entrant. Le troisième équipement réseau 802 des-encapsule tout message issu de ce tunnel et le propage comme si le message n'avait pas été dérouté vers l'équipement mandataire PXY 300. Il n'est ainsi pas nécessaire de leurrer l'adresse IP du système de taxation en ligne OCS 800 auprès de la passerelle PGW 125, ni de leurrer l'adresse IP de la passerelle PGW 125 auprès du système de taxation en ligne OCS 800.

La **Fig. 8B** illustre schématiquement un complément du système de télécommunication cellulaire EPS tel que représenté sur la Fig. 3, en variante de l'agencement présenté ci-dessus en relation avec la Fig. 8A. A noter que les agencements des Figs. 8A et 8B peuvent être implémentés dans un même système de télécommunication cellulaire EPS.

Sur le schéma de la Fig. 8B, la passerelle PGW 125 est connectée à un système de taxation hors ligne OFCS 810 via une liaison 811.

Comme déjà indiqué, dans le cadre de la technologie LTE, les interfaces (et donc les formats de messages applicables) - aussi appelés « reference points » selon la terminologie anglo-saxonne de la technologie LTE - entre les différents éléments constituant le système de télécommunication cellulaire EPS sont standardisées. Notamment, l'interface entre la passerelle PGW 125 et le système de taxation en ligne OCS 800 est dénommée Gz et est définie dans les spécifications 3GPP TS 23.234 « *3GPP system to Wireless Local Area Network (WLAN) interworking; System description* » et 3GPP TS 29.234 « *3GPP system to Wireless Local Area Network (WLAN) interworking; Stage 3* ».

La liaison 811 est une liaison logique. Cela signifie que des équipements réseau sont typiquement présents sur cette liaison 811 pour assurer les transmissions de paquets IP dans lesquels sont encapsulés les messages échangés. Ainsi, comme montré sur la Fig. 8B, l'équipement mandataire PXY 300 est connecté, via une liaison 813, à un quatrième équipement réseau (*e.g.* routeur ou commutateur) 812 présent sur la liaison 811.

Dans un mode de réalisation particulier, l'équipement mandataire PXY 300 intercepte des messages qui transitent sur la liaison 811. Le système de télécommunication cellulaire EPS est tel que la passerelle PGW 125 a connaissance de l'adresse IP du système de taxation hors ligne OFCS 810, et vice versa. Pour que l'équipement mandataire PXY 300 soit en position d'émuler des envois de messages par le système de taxation hors ligne OFCS 810 (tel que décrit ci-après en relation avec la Fig. 9), le système de télécommunication cellulaire EPS est tel que l'adresse IP de la passerelle PGW 125 est remplacée par l'adresse IP de l'équipement mandataire PXY 300 auprès du système de taxation hors ligne OFCS 810, et l'adresse IP du système de taxation hors ligne OFCS 800 est remplacée par l'adresse IP de l'équipement mandataire PXY 300 auprès de la passerelle PGW 125. Le système de taxation hors ligne OCS 810 croit ainsi échanger des messages avec la passerelle PGW 125, alors que, dans les faits, le système de taxation hors ligne OFCS 800 échange ces messages avec l'équipement mandataire PXY 300. Et surtout, la passerelle PGW 125 croit ainsi échanger des messages avec le système de taxation hors ligne OFCS 810, alors que, dans les faits, la passerelle PGW 125 échange ces messages avec l'équipement mandataire PXY 300.

A noter donc que la présence du quatrième équipement réseau 812 sur la liaison 811 n'est pas strictement nécessaire.

Dans une variante de réalisation, le quatrième équipement réseau 812 est configuré pour dérouter vers l'équipement mandataire PXY 300 les messages transitant sur la liaison 811. Par exemple, le quatrième équipement réseau 812 dispose d'une liaison dédiée avec l'équipement mandataire PXY 300, par exemple sous la forme d'un tunnel. Le quatrième équipement réseau 812 encapsule et transmet alors via ce tunnel respectif tout message entrant. Le quatrième équipement réseau 812 des-encapsule tout message issu de ce tunnel et le propage comme si le message n'avait pas été dérouté vers l'équipement mandataire PXY 300. Il n'est ainsi pas nécessaire de leurrer l'adresse IP du système de taxation hors ligne OFCS 810 auprès de la passerelle PGW 125, ni de leurrer l'adresse IP de la passerelle PGW 125 auprès du système de taxation hors ligne OFCS 810.

Contrairement aux messages interceptés sur la liaison 158 et les messages éventuellement interceptés sur la liaison 157 pour lesquels l'équipement mandataire PXY 300 effectue une inspection pour connaître le type de chaque message intercepté (voir les algorithmes des Figs. 5 et 6), l'équipement mandataire PXY 300 ne fait que renvoyer les messages interceptés sur la liaison 801 et/ou sur la liaison 811 vers leurs destinataires respectifs initialement ciblés. Les agencements schématiquement représentés sur les Figs. 8A et 8B permettent toutefois à l'équipement mandataire PXY 300 d'émuler des envois de messages par le système de taxation en ligne OCS 800 et/ou par le système de taxation hors ligne OFCS 810, comme décrit ci-après en relation avec la Fig. 9.

La **Fig. 9** illustre schématiquement une variante de réalisation des algorithmes des Figs. 7A et 7B, dans laquelle une session doit être fermée pour libérer de la bande passante. La Fig. 9 s'appuie sur l'un et/ou l'autre des agencements schématiquement illustrés sur les Figs. 8A et 8B.

Dans une étape S901, l'équipement mandataire PXY 300 détecte qu'une session est à fermer, c'est-à-dire que la bande passante garantie associée à une ou plusieurs porteuses radio de ladite session doit être libérée. L'étape S901 est identique à l'étape S701, mais vis-à-vis d'une session à fermer.

Dans une étape S902, l'équipement mandataire PXY 300 construit un message de requête de fermeture de session, vis-à-vis de ladite session, pour défaut de crédit.

Dans une étape S903, l'équipement mandataire PXY 300 émule un envoi, par le système de taxation en ligne OCS 800, du message de fermeture de session par défaut de crédit qui a été construit à l'étape S902, la passerelle PGW 125 pensant donc recevoir ledit message de la part du système de taxation en ligne OCS 800. Dans le cadre de la technologie LTE, ledit message est un message ASR (« Abort Session Request » en anglais) envoyé de manière asynchrone sur l'interface Gy. A noter que les messages ASR sont définis par le protocole DIAMETER, plus particulièrement dans le document normatif RFC 4005.

Dans une variante de réalisation de l'étape S903, l'équipement mandataire PXY 300 émule un envoi, par le système de taxation hors ligne OFCS 810, du message de fermeture de session construit à l'étape S902, la passerelle PGW 125 pensant donc recevoir ledit message de la part du système de taxation hors ligne OFCS 810. Dans le cadre de la technologie LTE, ledit message est un message ASR envoyé de manière asynchrone sur l'interface Gz.

Dans le cadre de la technologie LTE, il est aussi possible de fermer ladite session de manière synchrone, en modifiant une réponse de système de taxation en ligne OCS 800 au sein d'échanges réguliers entre la passerelle PGW 125 et le système de taxation en ligne OCS 800. En effet, la passerelle PGW 125 transmet régulièrement au système de taxation en ligne OCS 800 via l'interface Gy des messages CCR destinés à fournir au système de taxation en ligne OCS 800 des informations de consommation relatives à ladite session. Le système de taxation en ligne OCS 800 y répond en envoyant via l'interface Gy des messages CCA. L'équipement mandataire PXY 300 peut alors modifier un de ces messages CCA pour ne pas autoriser la poursuite de la session (typiquement en utilisant le code DIAMETER-AUTORIZATION-REJECTED).

Dans le cadre de la technologie LTE, il est aussi possible de fermer ladite session de manière synchrone, en modifiant une réponse de système de taxation hors ligne OFCS 810 au sein d'échanges réguliers entre la passerelle PGW 125 et le système de taxation hors ligne OFCS 810. En effet, la passerelle PGW 125 transmet régulièrement au système de taxation hors ligne OFCS 800 via l'interface Gz des messages CCR destinés à fournir au système de taxation hors ligne OFCS 800 des informations de consommation relatives à ladite session. Le système de taxation hors ligne OFCS 810 y répond en envoyant via l'interface Gz des messages CCA. L'équipement mandataire PXY 300 peut alors modifier un de ces messages CCA pour ne pas autoriser la poursuite de la session (en utilisant le code DIAMETER-AUTORIZATION-REJECTED).

A réception d'un message de demande de fermeture de session pour défaut de crédit, la passerelle PGW 125 informe l'équipement PCRF 124 de la clôture de la session en question. Les échanges se passent entre la passerelle PGW 125 et l'équipement PCRF 124 de la même manière que si la fermeture avait été requise par l'équipement utilisateur UE concerné.

Dans un mode de réalisation particulier, l'algorithme de la Fig. 7A et/ou l'algorithme de la Fig. 7B et/ou l'algorithme de la Fig. 9, est déclenché lorsque l'équipement mandataire PXY 300 détecte une baisse de bande passante offerte par une liaison sans-fil utilisée pour déporter une station de base eNB. Cette baisse de bande passante offerte par une liaison sans-fil est détectée par l'équipement mandataire PXY 300 en interrogeant via la liaison 307 le dispositif émetteur-récepteur SAT2 302 et/ou le dispositif émetteur-récepteur SAT1 301. L'interrogation via la liaison 307 se fait de manière régulière. Cela permet de réagir aux baisses de bande passante sur ladite liaison sans-fil dues à des changements de conditions climatiques dans l'environnement dans lequel ladite liaison sans-fil est établie (e.g. apparition de brouillard), en libérant de la bande passante garantie associée à une ou plusieurs porteuses radio précédemment établies. Ainsi, lorsque la bande passante sur ladite liaison sans-fil atteint un niveau inférieur à un premier seuil prédéfini TH1 au delà de la bande passante utilisé sur ladite liaison sans-fil (le premier seuil prédéfini TH1 étant inférieur à la marge ε évoquée précédemment), l'équipement mandataire PXY 300 cherche à récupérer de la bande passante précédemment attribuée, par exécution de l'algorithme de la Fig. 7A et/ou de l'algorithme de la Fig. 7B et/ou de l'algorithme de la Fig. 9.

Dans un mode de réalisation particulier, l'algorithme de la Fig. 7A et/ou l'algorithme de la Fig. 7B et/ou l'algorithme de la Fig. 9, est déclenché lorsque l'équipement mandataire PXY 300 détecte une baisse de la bande passante suivant une pente qui, par extrapolation, mène à un franchissement dudit premier seuil prédéfini TH1 avant écoulement d'un laps de temps prédéfini. Plus particulièrement, l'interrogation via la liaison 307 se fait de manière régulière. L'équipement mandataire PXY 300 effectue une extrapolation de l'évolution de la pente, par exemple en déterminant une droite affine passant par un premier point de mesure à l'itération précédente et un second point de mesure à l'itération courante. Par cette extrapolation, l'équipement mandataire PXY 300 estime quel serait le point de mesure après écoulement dudit laps de temps prédéfini (*e.g.* instant de la prochaine itération), si l'évolution de la pente restait la même. Si ce point de mesure estimé est inférieur au premier seuil prédéfini TH1, alors l'équipement mandataire PXY 300 cherche à récupérer de la bande passante précédemment attribuée, par exécution de l'algorithme de la Fig. 7A et/ou de l'algorithme de la Fig. 7B et/ou de l'algorithme de la Fig. 9.

Une autre méthode d'estimation de l'évolution de la pente au cours du temps consiste à échantillonner le laps de temps prédéfini selon un pas prédéfini (par exemple $1/10^e$ ou $1/20^e$) et à calculer une droite affine moyenne, ou au mieux une courbe représentative d'une fonction logarithmique, exponentielle et de degrés supérieur ou égale à 2, représentative de la tendance de cet échantillonnage. Ledit laps de temps prédéfini correspond ainsi à une fenêtre temps, glissante en fonction dudit pas prédéfini.

Dans un mode de réalisation particulier, l'équipement mandataire PXY 300 garde des traces des dégradations de session appliquées dans le cadre de l'algorithme de la Fig. 7A ou de l'algorithme de la Fig. 7B. Les sessions qui ont été fermées ne sont pas concernées. Ainsi, lorsque l'équipement mandataire PXY 300 détecte une hausse de bande passante offerte par une liaison sans-fil utilisée pour déporter une station de base eNB (par exemple, parce que les conditions climatiques se sont améliorées ou parce qu'au moins une autre session a été fermée), l'équipement mandataire PXY 300 peut chercher à ré-augmenter la bande passante attribuée à au moins une session ayant précédemment subi une dégradation. A noter que l'équipement mandataire PXY 300 cherche à ré-augmenter la bande passante attribuée que lorsque ladite hausse de bande passante offerte est telle que la bande passante sur ladite liaison sans-fil atteint un niveau supérieur à un second seuil prédéfini TH2 au delà de la bande passante utilisée sur ladite liaison sans-fil, le second seuil prédéfini TH2 étant supérieur au premier seuil prédéfini TH1 (principe d'hystérésis). A noter que le second seuil prédéfini TH2 est supérieur à la marge ε évoquée précédemment. Cette ré-augmentation de la bande passante s'effectue dans la limite fixée par la bande passante qui était attribuée à la session en question avant application de la dégradation. Ces traces des dégradations de session appliquées dans le cadre de l'algorithme de la Fig. 7A ou de l'algorithme de la Fig. 7B peuvent être conservées au sein du dispositif d'orchestration susmentionné en relation avec la Fig. 3. Ces ré-augmentations de bande passante attribuée sont réalisées par l'équipement mandataire PXY 300 en envoyant des messages de mise à jour de session, à destination de la passerelle PGW 125 via la liaison 158, en se faisant passer pour l'équipement PCRF 124. Dans le cadre de la technologie LTE, ces messages sont des messages RAR envoyés via l'interface Gx.

La **Fig. 10** illustre schématiquement un exemple d'architecture matérielle de l'équipement mandataire PXY 300.

L'équipement mandataire PXY 300 inclut alors, reliés par un bus de communication 1010 : un processeur ou CPU (*Central Processing Unit* en anglais) 1001 ; une mémoire vive RAM (*Random Access Memory* en anglais) 1002 ;

une mémoire morte ROM (*Read Only Memory* en anglais) 1003 ; une unité de stockage 1004, telle qu'un disque dur HDD (*Hard Disk Drive* en anglais), ou un lecteur de support de stockage, tel qu'un lecteur de cartes SD (*Secure Digital* en anglais) ; et au moins une interface de communication COM 1005 configurée pour permettre à l'équipement mandataire PXY 300 de communiquer au sein du système de télécommunication cellulaire EPS.

Le processeur 1001 est capable d'exécuter des instructions chargées dans la mémoire vive RAM 1002 à partir de la mémoire morte ROM 1003, ou d'une mémoire externe, ou d'un support de stockage, ou d'un réseau de communication. Lorsque l'équipement mandataire PXY 300 est mis sous tension, le processeur 1001 est capable de lire de la mémoire vive RAM 1002 des instructions et de les exécuter. Ces instructions forment un programme d'ordinateur causant l'implémentation, par le processeur 1001, de tout ou partie des algorithmes et étapes décrits ci-dessus.

Tout ou partie des algorithmes et étapes décrits ci-dessus peut ainsi être implémenté sous forme logicielle par exécution d'un ensemble d'instructions par une machine programmable, par exemple un DSP (*Digital Signal Processor* en anglais) ou un microprocesseur, ou être implémenté sous forme matérielle par une machine ou un composant (« chip » en en anglais) dédié ou un ensemble de composants (« chipset » en anglais) dédié, comme par exemple un composant FPGA (*Field-Programmable Gate Array* en anglais) ou un composant ASIC (*Application-Specific Integrated Circuit* en anglais).

**Revendications**

**1.** Procédé de gestion de bande passante dans un système de télécommunication cellulaire comportant :

- une partie accès radio (110) comportant une pluralité de stations de base permettant à des équipements utilisateurs (100) d'accéder à des services du système de télécommunication cellulaire pour lesquels des porteuses radio doivent être établies ; et
- une partie réseau cœur (120) comportant un équipement de contrôle de politiques de qualité de service (124) connecté via une première liaison (158) à une passerelle (125) via laquelle lesdites porteuses radio sont établies pour accéder auxdits services du système de télécommunication cellulaire ;

**caractérisé en ce que**, au moins une station de base (111) étant déportée par liaison sans-fil (303), un équipement mandataire (300) inclut dans le système de télécommunication cellulaire effectue les étapes suivantes :

- intercepter (S501) sur ladite première liaison chaque message d'établissement de session ou de mise à jour de session transmis entre l'équipement de contrôle de politiques de qualité de service et la passerelle ;
- lorsque ledit message ne concerne pas de porteuse radio impliquant une station de base déportée par une liaison sans-fil, propager (S517) ledit message vers son destinataire initialement ciblé, et
- lorsque ledit message concerne au moins une porteuse radio impliquant une station de base déportée par une liaison sans-fil :

    - déterminer (S512) une bande passante restante via ladite liaison sans-fil ;
    - lorsque la bande passante restante déterminée couvre un besoin en bande passante exprimé dans ledit message, propager (S517) ledit message vers son destinataire initialement ciblé ; et
    - lorsque la bande passante restante déterminée ne couvre pas le besoin en bande passante, refuser (S514), à la place de la destination d'origine dudit message, l'établissement ou la mise à jour de session lorsque la bande passante déterminée ne couvre pas un minimum de bande passante à garantir exprimé dans ledit message, et sinon, modifier (S516) ledit message, avant de le propager (S517) vers son destinataire initialement ciblé, en indiquant un besoin en bande passante au plus égal à la bande passante restante.

**2.** Procédé selon la revendication 1, **caractérisé en ce que** l'équipement mandataire intercepte tout message transitant sur la première liaison :

- en remplaçant, auprès de la passerelle, l'adresse de l'équipement de contrôle de politiques de qualité de service par l'adresse de l'équipement mandataire ;
- en remplaçant, auprès de l'équipement de contrôle de politiques de qualité de service, l'adresse de la passerelle par l'adresse de l'équipement mandataire ;

et **en ce que**, lorsque l'équipement mandataire propage tout message intercepté sur la première liaison, l'équipement mandataire remplace l'adresse source dudit message par sa propre adresse et l'adresse destination dudit message par l'adresse de son destinataire initialement ciblé.

**3.** Procédé selon l'une quelconque des revendications 1 et 2, **caractérisé en ce que** le système de télécommunication cellulaire comportant en outre un équipement de fonction applicative (130) connecté par une seconde liaison (157) à l'équipement de contrôle de politiques de qualité de service, l'équipement mandataire effectue les étapes suivantes :

- intercepter (S601) sur ladite seconde liaison chaque message d'établissement de session ou de mise à jour de session transmis depuis l'équipement de fonction applicative vers l'équipement de contrôle de politiques de qualité de service ;
- lorsque ledit message ne concerne pas de porteuse radio impliquant une station de base déportée par une liaison sans-fil, propager (S614) ledit message vers son destinataire initialement ciblé, et
- lorsque ledit message concerne au moins une porteuse radio impliquant une station de base déportée par une liaison sans-fil :

- déterminer (S609) une bande passante restante via ladite liaison sans-fil ;
- lorsque la bande passante restante déterminée couvre un besoin en bande passante exprimé dans ledit message, propager (S614) ledit message vers son destinataire initialement ciblé ; et
- lorsque la bande passante restante déterminée ne couvre pas le besoin en bande passante, refuser (S611), à la place de la destination d'origine dudit message, l'établissement ou la mise à jour de session.

**4.** Procédé selon la revendication 3, **caractérisé en ce que** l'équipement mandataire intercepte tout message transitant sur la seconde liaison :

- en remplaçant, auprès de l'équipement de fonction applicative, l'adresse de l'équipement de contrôle de politiques de qualité de service par l'adresse de l'équipement mandataire ;
- en remplaçant, auprès de l'équipement de contrôle de politiques de qualité de service, l'adresse de l'équipement de fonction applicative par l'adresse de l'équipement mandataire ;

et **en ce que**, lorsque l'équipement mandataire propage tout message intercepté sur la seconde liaison, l'équipement mandataire remplace l'adresse source dudit message par sa propre adresse et l'adresse destination dudit message par l'adresse de son destinataire initialement ciblé.

**5.** Procédé selon la revendication 4, **caractérisé en ce que**, avant de rejeter un établissement ou une mise à jour de session, l'équipement mandataire cherche (S701) à dégrader ou à fermer une ou plusieurs porteuses radio passant via ladite liaison sans-fil, en émulant (S703) un envoi, par l'équipement de fonction applicative, respectivement d'un message de mise à jour de session ou d'un message de fermeture de session à destination de l'équipement de contrôle de politiques de qualité de service.

**6.** Procédé selon l'une quelconque des revendications 1 à 5, **caractérisé en ce que**, ladite liaison sans-fil étant établie entre un premier dispositif émetteur-récepteur (301) et un second dispositif émetteur-récepteur (302), l'équipement mandataire détermine la bande passante restante via ladite liaison sans-fil en effectuant les étapes suivantes :

- interroger le premier dispositif émetteur-récepteur et/ou le second dispositif émetteur-récepteur pour obtenir une information de bande passante effective de ladite liaison sans-fil ;
- déterminer une bande passante utilisée via ladite liaison sans-fil en fonction de porteuses radio précédemment établies via ladite liaison sans-fil ; et
- déduire la bande passante restante à partir de la bande passante effective de ladite liaison sans-fil et de la bande passante utilisée via ladite liaison sans-fil.

**7.** Procédé selon l'une quelconque des revendications 1 à 6, **caractérisé en ce que**, avant de rejeter un établissement ou une mise à jour de session, l'équipement mandataire cherche (711) à dégrader ou à fermer une ou plusieurs porteuses radio passant via ladite liaison sans-fil, en émulant (S713) un envoi, par l'équipement de contrôle de politiques de qualité de service, respectivement d'un message de mise à jour de session ou d'un message de fermeture de session à destination de la passerelle.

**8.** Procédé selon l'une quelconque des revendications 1 à 7, **caractérisé en ce que**, le système de télécommunication cellulaire comportant en outre un système de facturation en ligne (800) connecté à ladite passerelle via une troisième liaison (801), avant de rejeter un établissement ou une mise à jour de session, l'équipement mandataire cherche (S901) à fermer une ou plusieurs porteuses radio passant via ladite liaison sans-fil, en émulant (S903) un envoi, par le système de facturation en ligne, d'un message de fermeture de session pour défaut de crédit à destination de la passerelle.

9. Procédé selon l'une quelconque des revendications 1 à 8, **caractérisé en ce que**, le système de télécommunication cellulaire comportant en outre un système de facturation hors ligne (810) connecté à ladite passerelle via une quatrième liaison (811), avant de rejeter un établissement ou une mise à jour de session, l'équipement mandataire cherche (S901) à fermer une ou plusieurs porteuses radio passant via ladite liaison sans-fil, en émulant (S903) un envoi, par le système de facturation hors ligne, d'un message de fermeture de session pour défaut de crédit à destination de la passerelle.

10. Procédé selon l'une quelconque des revendications 1 à 9, **caractérisé en ce que**, lorsque l'équipement mandataire modifie un message d'établissement de session ou un message de mise à jour de session, l'équipement mandataire conserve une marge de bande passante par rapport à la bande passante restante, et l'équipement mandataire cherche à dégrader et/ou à fermer une ou plusieurs porteuses radio lorsque l'équipement mandataire détecte une baisse de bande passante restante sur ladite liaison sans-fil en dessous d'un premier seuil prédéfini inférieur à ladite marge.

11. Procédé selon l'une quelconque des revendications 1 à 9, **caractérisé en ce que**, lorsque l'équipement mandataire modifie un message d'établissement de session ou un message de mise à jour de session, l'équipement mandataire conserve une marge de bande passante par rapport à la bande passante restante, et l'équipement mandataire cherche à dégrader et/ou à fermer une ou plusieurs porteuses radio lorsque l'équipement mandataire détecte une baisse de bande passante restante qui suit une pente menant dans un laps de temps prédéfini à une bande passante restante estimée inférieure à un premier seuil prédéfini inférieur à ladite marge.

12. Procédé selon l'une quelconque des revendications 10 et 11, **caractérisé en ce que** l'équipement mandataire cherche à améliorer et/ou à restaurer une ou plusieurs porteuses radio précédemment dégradées par l'équipement mandataire, lorsque l'équipement mandataire détecte une hausse de bande passante restante sur ladite liaison sans-fil au-dessus d'un second seuil prédéfini supérieur à ladite marge.

13. Procédé selon l'une quelconque des revendications 1 à 12, **caractérisé en ce que** le système de télécommunication cellulaire est de type LTE et **en ce que** ladite liaison sans-fil est une liaison satellite.

14. Equipement mandataire (300) destiné à être intégré dans un système de télécommunication cellulaire comportant :

   - une partie accès radio (110) comportant une pluralité de stations de base permettant à des équipements utilisateurs (100) d'accéder à des services du système de télécommunication cellulaire pour lesquels des porteuses radio doivent être établies ; et
   - une partie réseau cœur (120) comportant un équipement de contrôle de politiques de qualité de service (124) connecté via une première liaison (158) à une passerelle (125) via laquelle lesdites porteuses radio sont établies pour accéder auxdits services du système de télécommunication cellulaire ;

   **caractérisé en ce que**, au moins une station de base (111) étant déportée par liaison sans-fil (303), l'équipement mandataire inclut :

   - des moyens pour intercepter (S501) sur ladite première liaison chaque message d'établissement de session ou de mise à jour de session transmis entre l'équipement de contrôle de politiques de qualité de service et la passerelle ;
   - lorsque ledit message ne concerne pas de porteuse radio impliquant une station de base déportée par une liaison sans-fil, des moyens pour propager (S517) ledit message vers son destinataire initialement ciblé, et
   - lorsque ledit message concerne au moins une porteuse radio impliquant une station de base déportée par une liaison sans-fil :

      - des moyens pour déterminer (S512) une bande passante restante via ladite liaison sans-fil ;
      - lorsque la bande passante restante déterminée couvre un besoin en bande passante exprimé dans ledit message, des moyens pour propager (S517) ledit message vers son destinataire initialement ciblé ; et
      - lorsque la bande passante restante déterminée ne couvre pas le besoin en bande passante, des moyens pour refuser (S514), à la place de la destination d'origine dudit message, l'établissement ou la mise à jour de session lorsque la bande passante déterminée ne couvre pas un minimum de bande passante à garantir exprimé dans ledit message, et sinon, des moyens pour modifier (S516) ledit message, avant de le propager (S517) vers son destinataire initialement ciblé, en indiquant un besoin en bande passante au plus égal à la bande passante restante.

15. Système de télécommunication cellulaire comportant :

- une partie accès radio comportant une pluralité de stations de base permettant à des équipements utilisateurs d'accéder à des services du système de télécommunication cellulaire pour lesquels des porteuses radio doivent être établies ; et
- une partie réseau cœur comportant un équipement de contrôle de politiques de qualité de service connecté via une première liaison à une passerelle via laquelle lesdites porteuses radio sont établies pour accéder auxdits services du système de télécommunication cellulaire ;

**caractérisé en ce que**, au moins une station de base étant déportée par liaison sans-fil, ledit système inclut l'équipement mandataire selon la revendication 14.

**Patentansprüche**

1. Verfahren zur Bandbreitenverwaltung in einem zellularen Telekommunikationssystem, das aufweist:

- einen Funkzugriffsteil (110), der eine Vielzahl von Basisstationen aufweist, die Benutzerausrüstungen (100) den Zugriff auf Dienste des zellularen Telekommunikationssystems erlauben, für die Funkträger aufgebaut werden müssen; und
- einen Kernnetzteil (120), der eine Dienstgüterichtlinien-Kontrollausrüstung (124) aufweist, die über eine erste Verbindung (158) mit einem Gateway (125) verbunden ist, über das die Funkträger aufgebaut werden, um auf die Dienste des zellularen Telekommunikationssystems zuzugreifen;

**dadurch gekennzeichnet, dass**, da mindestens eine Basisstation (111) durch drahtlose Verbindung (303) ausgelagert ist, eine im zellularen Telekommunikationssystem enthaltene Proxy-Ausrüstung (300) die folgenden Schritte ausführt:

- Abfangen (S501) auf der ersten Verbindung jeder Sitzungsaufbau- oder Sitzungsupdate-Nachricht, die zwischen der Dienstgüterichtlinien-Kontrollausrüstung und dem Gateway übertragen wird;
- wenn die Nachricht keinen Funkträger betrifft, der eine durch eine drahtlose Verbindung ausgelagerte Basisstation impliziert, Verbreiten (S517) der Nachricht zu ihrem ursprünglich anvisierten Empfänger, und
- wenn die Nachricht mindestens einen Funkträger betrifft, der eine durch eine drahtlose Verbindung ausgelagerte Basisstation impliziert:

- Bestimmen (S512) einer verbleibenden Bandbreite über die drahtlose Verbindung;
- wenn die bestimmte verbleibende Bandbreite einen Bandbreitenbedarf abdeckt, der in der Nachricht ausgedrückt wird, Verbreiten (S517) der Nachricht zu ihrem ursprünglich anvisierten Empfänger; und
- wenn die bestimmte verbleibende Bandbreite den Bandbreitenbedarf nicht abdeckt, Verweigern (S514), an der Stelle des ursprünglichen Ziels der Nachricht, des Sitzungsaufbaus oder -updates, wenn die bestimmte Bandbreite nicht ein zu garantierendes Bandbreitenminimum abdeckt, das in der Nachricht ausgedrückt wird, und sonst Verändern (S516) der Nachricht, ehe sie zu ihrem ursprünglich anvisierten Empfänger verbreitet wird (S517), unter Angabe eines Bandbreitenbedarfs höchstens gleich der verbleibenden Bandbreite.

2. Verfahren nach Anspruch 1, **dadurch gekennzeichnet, dass** die Proxy-Ausrüstung jede über die erste Verbindung gehende Nachricht abfängt:

- indem sie beim Gateway die Adresse der Dienstgüterichtlinien-Kontrollausrüstung durch die Adresse der Proxy-Ausrüstung ersetzt;
- indem sie bei der Dienstgüterichtlinien-Kontrollausrüstung die Adresse des Gateways durch die Adresse der Proxy-Ausrüstung ersetzt;

und dass, wenn die Proxy-Ausrüstung jede auf der ersten Verbindung abgefangene Nachricht verbreitet, die Proxy-Ausrüstung die Quelladresse der Nachricht durch ihre eigene Adresse und die Zieladresse der Nachricht durch die Adresse ihres ursprünglich anvisierten Empfängers ersetzt.

3. Verfahren nach einem der Ansprüche 1 und 2, **dadurch gekennzeichnet, dass**, da das zellulare Telekommunikationssystem außerdem eine Anwendungsfunktion-Ausrüstung (130) aufweist, die durch eine zweite Verbindung (157) mit der Dienstgüterichtlinien-Kontrollausrüstung verbunden ist, die Proxy-Ausrüstung die folgenden Schritte ausführt:

- Abfangen (S601) auf der zweiten Verbindung jeder Sitzungsaufbau- oder Sitzungsupdate-Nachricht, die von der Anwendungsfunktion-Ausrüstung zur Dienstgüterichtlinien-Kontrollausrüstung übertragen wird;
- wenn die Nachricht keinen Funkträger betrifft, der eine durch eine drahtlose Verbindung ausgelagerte Basisstation impliziert, Verbreiten (S614) der Nachricht zu ihrem ursprünglich anvisierten Empfänger, und
- wenn die Nachricht mindestens einen Funkträger betrifft, der eine durch eine drahtlose Verbindung ausgelagerte Basisstation impliziert:

- Bestimmen (S609) einer verbleibenden Bandbreite über die drahtlose Verbindung;
- wenn die bestimmte verbleibende Bandbreite einen Bandbreitenbedarf abdeckt, der in der Nachricht ausgedrückt wird, Verbreiten (S614) der Nachricht zu ihrem ursprünglich anvisierten Empfänger; und
- wenn die bestimmte verbleibende Bandbreite den Bandbreitenbedarf nicht abdeckt, Verweigern (S611), an der Stelle des ursprünglichen Ziels der Nachricht, des Sitzungsaufbaus oder -updates.

4. Verfahren nach Anspruch 3, **dadurch gekennzeichnet, dass** die Proxy-Ausrüstung jede Nachricht abfängt, die über die zweite Verbindung geht:

- indem sie bei der Anwendungsfunktion-Ausrüstung die Adresse der Dienstgüterichtlinien-Kontrollausrüstung durch die Adresse der Proxy-Ausrüstung ersetzt;
- indem sie bei der Dienstgüterichtlinien-Kontrollausrüstung die Adresse der Anwendungsfunktion-Ausrüstung durch die Adresse der Proxy-Ausrüstung ersetzt; und dass, wenn die Proxy-Ausrüstung jede auf der zweiten Verbindung abgefangene Nachricht verbreitet, die Proxy-Ausrüstung die Quelladresse der Nachricht durch ihre eigene Adresse und die Zieladresse der Nachricht durch die Adresse ihres ursprünglich anvisierten Empfängers ersetzt.

5. Verfahren nach Anspruch 4, **dadurch gekennzeichnet, dass** die Proxy-Ausrüstung vor dem Verweigern eines Sitzungsaufbaus oder -updates versucht (S701), einen oder mehrere Funkträger einzuschränken oder zu sperren, die über die drahtlose Verbindung gehen, indem sie ein Senden, durch die Anwendungsfunktion-Ausrüstung, einer Sitzungsupdate-Nachricht oder einer Sitzungsabmeldung-Nachricht an die Dienstgüterichtlinien-Kontrollausrüstung emuliert (S703).

6. Verfahren nach einem der Ansprüche 1 bis 5, **dadurch gekennzeichnet, dass**, da die drahtlose Verbindung zwischen einer ersten Sende-Empfangs-Vorrichtung (301) und einer zweiten Sende-Empfangs-Vorrichtung (302) aufgebaut wird, die Proxy-Ausrüstung die verbleibende Bandbreite über die drahtlose Verbindung bestimmt, indem sie die folgenden Schritte ausführt:

- Befragen der ersten Sende-Empfangs-Vorrichtung und/oder der zweiten Sende-Empfangs-Vorrichtung, um eine Information über die tatsächliche Bandbreite der drahtlosen Verbindung zu erhalten;
- Bestimmen einer über die drahtlose Verbindung genutzten Bandbreite abhängig von vorher über die drahtlose Verbindung aufgebauten Funkträgern; und
- Ableiten der verbleibenden Bandbreite ausgehend von der tatsächlichen Bandbreite der drahtlosen Verbindung und der über die drahtlose Verbindung genutzten Bandbreite.

7. Verfahren nach einem der Ansprüche 1 bis 6, **dadurch gekennzeichnet, dass** die Proxy-Ausrüstung vor dem Verweigern eines Sitzungsaufbaus oder -updates versucht (711), einen oder mehrere Funkträger, die über die drahtlose Verbindung gehen, einzuschränken oder zu sperren, indem sie ein Senden, durch die Dienstgüterichtlinien-Kontrollausrüstung, einer Sitzungsupdate-Nachricht oder einer Sitzungsabmeldung-Nachricht an das Gateway emuliert (S713).

8. Verfahren nach einem der Ansprüche 1 bis 7, **dadurch gekennzeichnet, dass**, da das zellulare Telekommunikationssystem außerdem ein Online-Fakturierungssystem (800) aufweist, das über eine dritte Verbindung (801) mit dem Gateway verbunden ist, die Proxy-Ausrüstung vor dem Verweigern eines Sitzungsaufbaus oder -updates versucht (S901), einen oder mehrere Funkträger zu sperren, die über die drahtlose Verbindung gehen, indem sie ein Senden, durch das Online-Fakturierungssystem, einer Sitzungsabmeldung-Nachricht aufgrund mangelnden Guthabens an das Gateway emuliert (S903).

9.  Verfahren nach einem der Ansprüche 1 bis 8, **dadurch gekennzeichnet, dass**, da das zellulare Telekommunikationssystem außerdem ein Offline-Fakturierungssystem (810) aufweist, das über eine vierte Verbindung (811) mit dem Gateway verbunden ist, die Proxy-Ausrüstung vor dem Verweigern eines Sitzungsaufbaus oder -updates versucht (S901), einen oder mehrere Funkträger zu sperren, die über die drahtlose Verbindung gehen, indem sie ein Senden, durch das Offline-Fakturierungssystem, einer Sitzungsabmeldung-Nachricht aufgrund mangelnden Guthabens an das Gateway emuliert (S903).

10. Verfahren nach einem der Ansprüche 1 bis 9, **dadurch gekennzeichnet, dass**, wenn die Proxy-Ausrüstung eine Sitzungsaufbau-Nachricht oder eine Sitzungsupdate-Nachricht verändert, die Proxy-Ausrüstung einen Bandbreitenbereich bezüglich der verbleibenden Bandbreite beibehält, und die Proxy-Ausrüstung versucht, einen oder mehrere Funkträger einzuschränken und/oder zu sperren, wenn die Proxy-Ausrüstung eine Abnahme verbleibender Bandbreite auf der drahtlosen Verbindung unter eine erste vordefinierte Schwelle geringer als der Bereich erfasst.

11. Verfahren nach einem der Ansprüche 1 bis 9, **dadurch gekennzeichnet, dass**, wenn die Proxy-Ausrüstung eine Sitzungsaufbau-Nachricht oder eine Sitzungsupdate-Nachricht verändert, die Proxy-Ausrüstung einen Bandbreitenbereich bezüglich der verbleibenden Bandbreite beibehält, und die Proxy-Ausrüstung versucht, einen oder mehrere Funkträger einzuschränken und/oder zu sperren, wenn die Proxy-Ausrüstung eine Abnahme verbleibender Bandbreite erfasst, die einem Gefälle folgt, das in einem vorbestimmten Zeitraum zu einer geschätzten verbleibenden Bandbreite unter einer vordefinierten ersten Schwelle geringer als der Bereich führt.

12. Verfahren nach einem der Ansprüche 10 und 11, **dadurch gekennzeichnet, dass** die Proxy-Ausrüstung versucht, einen oder mehrere vorher durch die Proxy-Ausrüstung eingeschränkten Funkträger zu verbessern und/oder wiederherzustellen, wenn die Proxy-Ausrüstung eine Erhöhung verbleibender Bandbreite auf der drahtlosen Verbindung über eine zweite vordefinierte Schwelle größer als der Bereich erfasst.

13. Verfahren nach einem der Ansprüche 1 bis 12, **dadurch gekennzeichnet, dass** das zellulare Telekommunikationssystem vom Typ LTE ist, und dass die drahtlose Verbindung eine Satellitenverbindung ist.

14. Proxy-Ausrüstung (300), die dazu bestimmt ist, in ein zellulares Telekommunikationssystem integriert zu werden, das aufweist:

  - einen Funkzugriffsteil (110), der eine Vielzahl von Basisstationen aufweist, die es Benutzerausrüstungen (100) ermöglichen, auf Dienste des zellularen Telekommunikationssystems zuzugreifen, für die Funkträger aufgebaut werden müssen; und
  - einen Kernnetzteil (120), der eine Dienstgüterichtlinien-Kontrollausrüstung (124) aufweist, die über eine erste Verbindung (158) mit einem Gateway (125) verbunden ist, über das die Funkträger aufgebaut werden, um auf die Dienste des zellularen Telekommunikationssystems zuzugreifen;

  **dadurch gekennzeichnet, dass**, da mindestens eine Basisstation (111) bezüglich der drahtlosen Verbindung (303) ausgelagert ist, die Proxy-Ausrüstung (300) enthält:

  - Einrichtungen, um auf der ersten Verbindung jede Sitzungsaufbau- oder Sitzungsupdate-Nachricht abzufangen (S501), die zwischen der Dienstgüterichtlinien-Kontrollausrüstung und dem Gateway übertragen wird;
  - wenn die Nachricht keinen Funkträger betrifft, der eine durch eine drahtlose Verbindung ausgelagerte Basisstation impliziert, Einrichtungen zur Verbreitung (S517) der Nachricht zu ihrem ursprünglich anvisierten Empfänger, und
  - wenn die Nachricht mindestens einen Funkträger betrifft, der eine durch eine drahtlose Verbindung ausgelagerte Basisstation impliziert:

    - Einrichtungen, um eine verbleibende Bandbreite über die drahtlose Verbindung zu bestimmen (S512);
    - wenn die bestimmte verbleibende Bandbreite einen in der Nachricht ausgedrückten Bandbreitenbedarf abdeckt, Einrichtungen zur Verbreitung (S517) der Nachricht zu ihrem ursprünglich anvisierten Empfänger;

und

- wenn die bestimmte verbleibende Bandbreite den Bandbreitenbedarf nicht abdeckt, Einrichtungen zur Verweigerung (S514), an der Stelle des ursprünglichen Ziels der Nachricht, des Sitzungsaufbaus oder -updates, wenn die bestimmte Bandbreite nicht ein in der Nachricht ausgedrücktes zu garantierendes Bandbreitenminimum abdeckt, und sonst Einrichtungen zum Verändern (S516) der Nachricht, ehe sie zu ihrem ursprünglich anvisierten Empfänger verbreitet wird (S517), unter Angabe eines Bandbreitenbedarfs höchstens gleich der verbleibenden Bandbreite.

**15.** Zellulares Telekommunikationssystem, das aufweist:

- einen Funkzugriffsteil, der eine Vielzahl von Basisstationen aufweist, die es Benutzerausrüstungen erlauben, auf Dienste des zellularen Telekommunikationssystems zuzugreifen, für die Funkträger aufgebaut werden müssen; und
- einen Kernnetzteil, der eine Dienstgüterichtlinien-Kontrollausrüstung aufweist, die über eine erste Verbindung mit einem Gateway verbunden ist, über das die Funkträger aufgebaut werden, um auf die Dienste des zellularen Telekommunikationssystems zuzugreifen;

**dadurch gekennzeichnet, dass**, da mindestens eine Basisstation durch drahtlose Verbindung ausgelagert ist, das System die Proxy-Ausrüstung nach Anspruch 14 enthält.

**Claims**

**1.** A method for managing bandwidth in a cellular telecommunication system comprising:

- a radio access part (110) comprising a plurality of base stations enabling user equipment (100) to access services of the cellular telecommunication system for which radio bearers have to be set up; and
- a core network part (120) comprising quality-of-service policy control equipment (124) connected via a first connection (158) to a gateway (125) via which said radio bearers are set up in order to access said services of the cellular telecommunication system;

**characterised in that**, at least one base station (111) being remotely set by wireless connection (303), proxy equipment (300) included in the cellular telecommunication system performs the following steps:

- intercepting (S501) on said first connection each session establishment or session update message transmitted between the quality-of-service policy control equipment and the gateway;
- when said message does not concern a radio bearer involving a base station remotely set by a wireless connection, propagating (S517) said message to its initially targeted destination and,
- when said message concerns at least one radio bearer involving a base station remotely set by wireless connection:
- determining (S512) a remaining bandwidth via said wireless connection;

- when the determined remaining bandwidth covers a bandwidth requirement expressed in said message, propagating (S517) said message to its initially targeted destination; and,
- when the determined remaining bandwidth does not cover the bandwidth requirement, refusing (S514), in place of the original destination of said message, the session establishment or update when the determined bandwidth does not cover a minimum bandwidth to be guaranteed expressed in said message, and otherwise modifying (S516) said message, before propagating (S517) it to its initially targeted destination, indicating a bandwidth requirement no more than the remaining bandwidth.

**2.** The method according to claim 1, **characterised in that** the proxy equipment intercepts any message passing over the first connection:

- by replacing, to the gateway, the address of the quality-of-service policy control equipment with the address of the proxy equipment;
- by replacing, to the quality-of-service policy control equipment, the address of the gateway with the address of the proxy equipment;

and **in that**, when the proxy equipment propagates any message intercepted on the first connection, the proxy equipment replaces the source address of said message with its own address and the destination address of said message with the address of its initially targeted destination.

3. The method according to any one of claims 1 and 2, **characterised in that**, the cellular telecommunication system further comprising an application function equipment (130) connected by a second connection (157) to the quality-of-service policy control equipment, the proxy equipment performs the following steps:

- intercepting (S601) on said second connection each session establishment or session update message transmitted from the application function equipment to the quality-of-service policy control equipment;
- when said message does not concern a radio bearer involving a base station remotely set by a wireless connection, propagating (S614) said message to its initially targeted destination and,
- when said message concerns at least one radio bearer involving a base station remotely set by a wireless connection:

    - determining (S609) a remaining bandwidth via said wireless connection;
    - when the determined remaining bandwidth covers a bandwidth requirement expressed in said message, propagating (S614) said message to its initially targeted destination; and,
    - when the determined remaining bandwidth does not cover the bandwidth requirement, refusing (S611), in place of the original destination of said message, the session establishment or update.

4. The method according to claim 3, **characterised in that** the proxy equipment intercepts any message passing over the second connection:

    - by replacing, to the application function equipment, the address of the quality-of-service policy control equipment with the address of the proxy equipment;
    - by replacing, to the quality-of-service policy control equipment, the address of the application function equipment with the address of the proxy equipment;

and **in that**, when the proxy equipment propagates any message intercepted on the second connection, the proxy equipment replaces the source address of said message with its own address and the destination address of said message with the address of its initially targeted destination.

5. The method according to claim 4, **characterised in that**, before rejecting a session establishment or update, the proxy equipment seeks (S701) to degrade or close one or more radio bearers passing via said wireless connection, by emulating (S703) a sending, by the application function equipment, respectively a session update message or a session closure message intended for the quality-of-service policy control equipment.

6. The method according to any one of claims 1 to 5, **characterised in that**, said wireless connection being established between a first transceiver device (301) and a second transceiver device (302), the proxy equipment determines the remaining bandwidth via said wireless connection by performing the following steps:

    - interrogating the first transceiver device and/or the second transceiver device for obtaining actual bandwidth information on said wireless connection;
    - determining a bandwidth used via said wireless connection according to radio bearers previously set up via said wireless connection; and
    - deducing the remaining bandwidth from the actual bandwidth of said wireless connection and the bandwidth used via said wireless connection.

7. The method according to any one of claims 1 to 6, **characterised in that**, before rejecting a session establishment or update, the proxy equipment seeks (711) to degrade or close one or more radio bearers passing via said wireless connection, by emulating (S713) a sending, by the quality-of-service policy control equipment, respectively of a session update message or of a session closure message intended for the gateway.

8. The method according to any one of claims 1 to 7, **characterised in that**, the cellular telecommunication system further comprising an on-line charging system (800) connected to said gateway via a third connection (801), before rejecting a session establishment or update, the proxy equipment seeks (S901) to close one or more radio bearers passing via said wireless connection, by emulating (S903) a sending, by the on-line charging system, of a session closure message for lack of credit intended for the gateway.

9. The method according to any one of claims 1 to 8, **characterised in that**, the cellular telecommunication system further comprising an off-line charging system (810) connected to said gateway via a fourth connection (811), before rejecting a session establishment or update, the proxy equipment seeks (S901) to close one or more radio bearers passing via said wireless connection, by emulating (S903) a sending, by the off-line invoicing system, of a session closure message for lack of credit intended for the gateway.

10. The method according to any one of claims 1 to 9, **characterised in that** when the proxy equipment modifies a session establishment message or a session update message, the proxy equipment keeps a margin of bandwidth with respect to the remaining bandwidth, and the proxy equipment seeks to degrade and/or to close one or more radio bearers when the proxy equipment detects a drop in remaining bandwidth on said wireless connection below a first predefined threshold lower than said margin.

11. The method according to any one of claims 1 to 9, **characterised in that**, when the proxy equipment modifies a session establishment message or a session update message, the proxy equipment keeps a margin of bandwidth with respect to the remaining bandwidth, and the proxy equipment seeks to degrade and/or to close one or more radio bearers when the proxy equipment detects a drop in remaining bandwidth that follows a slope leading, within a predefined period of time, to a remaining bandwidth estimated to be below a first predefined threshold lower than said margin.

12. The method according to any one of claims 10 and 11, **characterised in that** the proxy equipment seeks to improve and/or to restore one or more radio bearers previously degraded by the proxy equipment, when the proxy equipment detects an increase in remaining bandwidth on the wireless connection above a second predefined threshold higher than said margin.

13. The method according to any one of claims 1 to 12, **characterised in that** the cellular telecommunication system is of the LTE type and **in that** said wireless connection is a satellite connection.

14. Proxy equipment (300) intended to be integrated in a cellular telecommunication system comprising:

  - a radio access part (110) comprising a plurality of base stations enabling user equipment (100) to access services of the cellular telecommunication system for which radio bearers have to be set up; and
  - a core network part (120) comprising quality-of-service policy control equipment (124) connected via a first connection (158) to a gateway (125) via which said radio bearers are set up for accessing said services of the cellular telecommunication system;

  **characterised in that** that, at least one base station (111) being remotely set by wireless connection (303), the proxy equipment includes:

  - means for intercepting (S501), on said first connection, each session establishment or session update message transmitted between the quality-of-service policy control equipment and the gateway;
  - when said message does not concern a radio bearer involving a base station remotely set by a wireless connection, means for propagating (S517) said message to its initially targeted destination, and,
  - when said message concerns at least one radio bearer involving a base station remotely set by a wireless connection:

    - means for determining (S512) a remaining bandwidth via said wireless connection;
    - when the determined remaining bandwidth covers a bandwidth requirement expressed in said message, means for propagating (S517) said message to its initially targeted destination; and,
    - when the determined remaining bandwidth does not cover the bandwidth requirement, means for refusing (S514), in place of the original destination of said message, the establishment or updating of a session when the determined bandwidth does not cover a minimum bandwidth to be guaranteed expressed in said message, and otherwise means for modifying (S516) said message, before propagating (S517) it to its initially targeted destination, indicating a bandwidth requirement of no more than the remaining bandwidth.

15. Cellular telecommunication system comprising:

- a radio access part comprising a plurality of base stations enabling user equipment to access services of the cellular telecommunication system for which radio bearers have be set up; and
- a core network part comprising quality-of-service policy control equipment connected via a first connection to a gateway via which said radio bearers are set up for accessing said services of the cellular telecommunication system;

**characterised in that**, at least one base station being remotely set by wireless connection, said system includes the proxy equipment according to claim 14.

Fig. 1

Identification de profil utilisateur

Application de politique QoS

Fig. 2A

## Fig. 2B

## Fig. 3

| 100 UE | 125 PGW | 124 PCRF | 121 HSS | 300 PXY |

Vérification QoS

Identification de profil utilisateur

Application de politique QoS

Fig. 4A

| 130 | 300 | 124 | 125 | 100 |
| AF | PXY | PCRF | PGW | UE |

451

452

453

Création de
session IP-CAN

455

454

456

457

Vérification QoS

458

459

Application de
politique QoS

460

462

461

463

Fig. 4B

S501 — Réception d'un message intercepté

S502 — Identification de l'émetteur du message intercepté

non ← PGW ? → oui

S503

S507 — Identification du type du message en provenance de l'équipement PCRF

S504 — Identification du type du message en provenance de la passerelle PGW

S506

oui ← A analyser? → non → Propager ← non ← A analyser? → oui

S508

S505

Identification de cellule

S509

non ← Liaison sans-fil ? → oui

S510

S511 — Détermination d'un besoin en bande passante

Propager — S517

S512 — Détermination d'une bande passante restante via la liaison sans-fil

S515

non ← A modifier ? ← oui ← OK? — S513

oui

non

S516 — Modification de message

S514 — Rejet

Fig. 5

S601 — Réception d'un message intercepté

S602 — Identification de l'émetteur du message intercepté

non ← OK? → oui
S603

S604

Identification du type du message

non ← OK? oui
S605

Propager
S614

S606

Identification de cellule

non ← Liaison sans-fil ? oui
S607

S608 — Détermination d'un besoin en bande passante

S609 — Détermination d'une bande passante restante via la liaison sans-fil

S611

oui ← OK? → non → Rejet
S610

Fig. 6

S701 — Détection d'une session à dégrader

S702 — Construction d'un message destiné à l'interface Rx

S703 — Emulation d'envoi du message par l'équipement AF

Fig. 7A

S711 — Détection d'une session à dégrader

S712 — Construction d'un message destiné à l'interface Gx

S713 — Emulation d'envoi du message par l'équipement PCRF

Fig. 7B

**800**
OCS

803

802

**300**
PXY

801

**125**
PGW

Fig. 8A

Fig. 8B

S901 Détection d'une session à dégrader

S902 Construction d'un message au format Gy ou Gz

S903 Emulation d'envoi du message sur l'interface Gy ou Gz

Fig. 9

Fig. 10

**EP 3 539 318 B1**

## RÉFÉRENCES CITÉES DANS LA DESCRIPTION

**Documents brevets cités dans la description**

- US 2014177840 A